# EUROPEAN PATENT SPECIFICATION

(11) **EP 3 396 051 B1**
(45) Date of publication and mention of the grant of the patent: **01.06.2022**
(21) Application number: 18168949.8
(22) Date of filing: 24.04.2018
(51) Int. Cl.: D06F 34/05, D06F 101/00, D06F 103/00, D06F 105/02, D06F 105/08, D06F 105/10, D06F 105/52, D06F 105/56, D06F 105/58

(54) **LAUNDRY TREATING APPARATUS, CONTROL METHOD OF LAUNDRY TREATMENT APPARATUS AND ONLINE SYSTEM INCLUDING THE SAME**
WÄSCHEBEHANDLUNGSVORRICHTUNG, STEUERUNGSVERFAHREN FÜR EINE WÄSCHEBEHANDLUNGSVORRICHTUNG UND ONLINE-SYSTEM DAMIT
APPAREIL DE TRAITEMENT DE LINGE, PROCÉDÉ DE COMMANDE D'UN APPAREIL DE TRAITEMENT DE LINGE ET SYSTÈME EN LIGNE LE COMPRENANT

(30) Priority: 25.04.2017 KR 20170053069; 11.04.2018 KR 20180042088
(43) Date of publication of application: 31.10.2018
(73) Proprietor: LG Electronics Inc., Seoul 07336 (KR)
(72) Inventor: KWON, Baekeun, Seoul 08592 (KR); KIM, Hyejeong, Seoul 08592 (KR); MIN, Byeongho, Seoul 08592 (KR); BAE, Yonggyung, Seoul 08592 (KR)
(74) Representative: Vossius & Partner Patentanwälte Rechtsanwälte mbB

(56) References cited:
- CN-A- 106 032 616
- US-A1- 2018 044 834

## Description

The present invention relates to a laundry treating apparatus, a control method of the laundry treating apparatus, and an online system including the same, and more particularly, to a laundry treating apparatus that may recommend one or more of user customized courses or options by reflecting use history or area information, a control method of the laundry treating apparatus and an online system including the same.

Generally, a user selects a course and option provided by a laundry treating apparatus when performing washing or drying through the laundry treating apparatus.

The course means a cycle completed by performing full cycles of a washing cycle for removing particles of laundry, a rinsing cycle for detaching particles of laundry from a detergent, and a dehydrating cycle for removing water of laundry. The option may mean that rpm of a drum, water temperature, water level, steam intensity, steam level, the number of times of the washing cycle, the rinsing cycle and the dehydrating cycle, etc. may be controlled when the course is performed.

Although the user may use a course and an option basically provided by the laundry treating apparatus as they area, the user may wash laundry by selecting a course and option suitable for his/her style in accordance with the amount of laundry, material of laundry, current weather, schedule, etc.

At this time, there is inconvenience in that the user should manually select a desired course and option whenever the user performs washing.

Also, the user may use the laundry treating apparatus by changing a course and option at a certain pattern in accordance with statuses such as residential area, occupation, environment, family member, weather, schedule of a certain pattern, time zone, and season. Even in this case, there is inconvenience in that the user should manually select a course and option in accordance with each status. Also, even though the laundry treating apparatus include various functions such as reserved operation, sterilization treatment such as steam supply or high temperature condition, and energy saving, there is inconvenience in that the user should select such functions every time, whereby a problem occurs in that the functions fail to be exerted properly.

Recently, the laundry treating apparatus could be connected with a server provided by a seller or manufacturer to enable communication, and the server could display a state of the laundry treating apparatus or perform communication with an external terminal that may control the laundry treating apparatus.

The server may collect a history or pattern of a plurality of purchasers or users, who use laundry treating apparatuses sold by manufacturers and sellers, as big data.

However, a problem occurs in that proper convenience is not provided to users, who have purchased the laundry treating apparatus, by using the big data.

To solve this problem, according to the Korean Registered Patent No. 10-1381144 (Laid-open date:2008.09.02), a list of various kinds of laundry, which are listed in the laundry treating apparatus per item, textile and function, is provided to a user, and a course is recommended if the user selects a type of laundry.

However, this prior art has problems in that the user should directly input information, there are many manipulation buttons in the laundry treating apparatus and manipulation is complicated, and the user should select a course and an option every time during driving of the laundry treating apparatus.

Also, according to the Korean Registered Patent No. 10-0370088 (Laid open date: 02.07.10), a user downloads a corresponding course after downloading customized course information from a server that manages a laundry treating apparatus, thereby performing washing. The user may input information such as occupation, age, children information, the amount of laundry to Internet to manufacture a customized course, and if the user selects the customized course during washing, washing may be performed to be suitable for each home.

However, this prior art has problems in that the user should directly input information to Internet to generate a customized course and download the corresponding course after generating the corresponding course. Also, a problem occurs in that the user should continuously input information and download a corresponding course if a use condition is varied.

Also, a problem occurs in the aforementioned prior arts in that the user's spontaneous communication is required in such a manner that the user should download a course and option required for each user one by one even though the course and option are stored in the server, whereby effects of the course and option fail to be exerted properly.

To solve the above-described problems, according to the Korean Patent Publication No. 10-2015-0118749 (Publication Date: 2015.10.23), a control method of a terminal has been developed in which a pattern of a use history of a washing machine directly used by a user is analyzed and then a course to be performed by a user is predicted and provided.

However, since the use history devised by a washing machine connected with the terminal is analyzed, it is necessary to accumulate a considerable use history to predict the pattern. Therefore, since the accumulated use history is not sufficient or there is no use history due to a first use of the washing machine, a course and option of the washing machine cannot be recommended or exactness is remarkably reduced.

Also, since an entity for predicting the pattern from the course and option is an external terminal, if the washing machine cannot perform communication with the external terminal or communication connection is blocked, a problem occurs in that recommendation of the course and option is not possible regardless of accumulation of the use history.

Moreover, in the aforementioned prior art, various types of time such as the time for communication connection of the washing machine with the external terminal or server to allow the user to be recommended for a course and option, the time when the external terminal or server should receive and compute information, and the time for recommendation of a course and option are required, whereby a problem occurs in that a course and option cannot be recommended immediately.

Moreover, the laundry treating apparatus and the prior arts have problems in that the laundry treating apparatus fails to recognize area information such as weather information and atmospheric information of a zone where a user is currently located, and information on electric charges per time zone, or cannot exactly receive area information of the zone where the user is located because the laundry treating apparatus depends on only area information automatically provided by the server.

US 2018/044834 A1 discloses a washing management device, method and washing machine. CN 106 032 616 A discloses a clothes washing management device and a method thereof.

Accordingly, the present invention is directed to a laundry treating apparatus, a control method of the laundry treating apparatus, and an online system including the same, which substantially obviate one or more problems due to limitations and disadvantages of the related art.

An object of the present invention is to provide a course and option customized for a user by using deep learning (deep neural network).

Another object of the present invention is to provide a laundry treating apparatus that can compute and recommend a course and option customized for a user.

Still another object of the present invention is to provide a course and option customized for a user even though a laundry treating apparatus is connected with a server and an external terminal by communication.

Further still another object of the present invention is to provide a course and option customized for a user, which can be recommended through a recommendation formula obtained by deep learning even without a use history of a specific user.

Further still another object of the present invention is to provide a course and option customized for a user, which can be recommended immediately if a recommendation request is input.

Further still another object of the present invention is to provide a laundry treating apparatus that can periodically receive information from a server or external terminal as a power source is always supplied to a communication module built in the laundry treating apparatus.

Further still another object of the present invention is to provide a course and option customized for a user, which can be recommended through a use history of a laundry treating apparatus used by a user, whereby convenience is provided to the user such that the user may not select a course and option separately.

Further still another object of the present invention is to provide a laundry treating apparatus and its system, which can automatically be varied to a frequently used option with respect to a specific time zone, a specific day, a specific weather condition, etc. even though a user does not edit an option function every time.

Further still another object of the present invention is to provide a laundry treating apparatus and its system, which can prevent a user from artificially inputting or downloading information.

Further still another object of the present invention is to provide a course and option customized for a user, which can automatically be recommended by recognizing a pattern of a user's course and option even though an environment where the user is located is varied.

Further still another object of the present invention is to provide a course and option predicted to be used by a specific user, which can be recommended by analyzing a use history of a random user.

Further still another object of the present invention is to provide a course and option predicted to be used by a specific user, which can be recommended by analyzing a use history of the specific user.

Further still another object of the present invention is to provide an optimized course and option which can be recommended by reflecting weather information in histories of users.

Further still another object of the present invention is to provide an optimized course and option which can be recommended by reflecting atmospheric information in histories of users.

Further still another object of the present invention is to provide an optimized course and option which can be recommended by reflecting water information, earthquake occurrence information, and information on electric charges per time zone in histories of users.

Further still another object of the present invention is to actively provide a course and option customized for a user to maximize convenience of the user.

Further still another object of the present invention is to obtain reliability by explaining an optimized course and option through an external terminal, which can perform communication with a laundry treating apparatus.

Further still another object of the present invention is to provide an optimized course and option by identifying a user's schedule through an external terminal.

Further still another object of the present invention is to recommend time, date, and day, which enable an optimized course customized for a user for a certain time period, for an external terminal.

Additional advantages, objects, and features of the invention will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings.

To achieve these objects and other advantages and in accordance with the purpose of the invention, as embodied herein, the invention provides a laundry treating apparatus as defined in claim 1.

Therefore, when the laundry treating apparatus recommends the course and option, the laundry treating apparatus may not need assistance of a server and an external terminal.

The laundry treating apparatus of the present invention may further comprise a communication module connected with a server or an external terminal, which manages the laundry treating apparatus, by communication to transfer information to the controller. However, in the present invention, the controller performs a computing function. Therefore, the controller may be provided to compute and determine the course or option to be recommended even though the communication module is disabled or the communication connection is blocked.

The controller includes a storage unit in which the recommendation formula is stored, and a computing unit for computing the course or option to be performed from the random courses or the random options in accordance with the recommendation formula and determining the course or option to be recommended. The storage unit is provided to store use histories of N times, and if the use histories of N times or more are stored, the use histories are deleted in the stored order. The storage unit includes a nonvolatile memory for storing information even though power supply is blocked. Therefore, the use histories or the recommendation formula may be stored continuously even though the power source is blocked.

The computing unit includes a parallel computing unit that may simultaneously perform parallel processing of different tasks through a plurality of processes. Therefore, a complicated computation may be performed through the recommendation formula, whereby the course or option may be determined.

The recommendation formula may be provided to output the course or option to be recommended by reflecting area information provided by the server through the communication module or a scheduler provided by the external terminal if the area information or the scheduler is input.

The area information may include any one or more of weather information as to rainy weather of an area where the laundry treating apparatus is located, including rainfall probability, atmospheric information providing a temperature, humidity and an atmospheric pollution state of the area, earthquake information providing whether earthquake has occurred in the area, water quality information providing water quality of the area, and information on electric charges per time zone of the area. Therefore, the computing unit may recommend a suitable course or option by receiving the area information and various kinds of information of the scheduler as well as the use histories. The computing unit may recommend the option by controlling at least any one of washing strength, rinsing times, dehydrating strength, device washing, operation time, water temperature, and steam supply, through the area information.

In another aspect, to achieve the objects of the present invention, the controller may compute a course or option to be recommended from the random courses or the random options in accordance with a recommendation formula acquired through a use history of a random user if the recommendation request unit is input.

The controller may be provided to determine a course or option to be recommended for the specific user from the random courses or the random options even before information including a use history of a specific user who uses the laundry treating apparatus is input.

The recommendation formula may be provided as an algorithm acquired from a server, which manages a random laundry treating apparatus including the laundry treating apparatus, by deep learning based on any one or more of a use history of the specific user, a use history of a random user, and area information where the laundry treating apparatus is located.

Therefore, the laundry treating apparatus of the present invention may recommend a course or option even during initial driving.

Meanwhile, the recommendation formula may be provided to output the course or option to be recommended if a use history of five times or less is input.

To this end, the storage unit may be provided to store use histories of five times, and if the use histories of five times are stored, the use histories are deleted in the stored order.

Meanwhile, the controller may be provided to determine a course or option to be recommended for a specific user through a recommendation formula acquired by deep learning of a use history of a random user if the recommendation request unit is input, and drive at least any one of the driver, a water supply valve and a drainage pump in accordance with the recommended course or option.

The recommendation formula, a learning formula, which may update the recommendation formula and the use histories of the specific user may be stored in the storage unit. The computing unit may compute a course or option to be performed from the random courses or the random options in accordance with the recommendation formula to determine the course or option to be recommended or reacquire the recommendation formula by computing the use histories of the specific user through the learning formula.

Therefore, the laundry treating apparatus of the present invention may update and optimize the recommendation formula even though communication connection with the server is blocked.

Meanwhile, the storage unit may further include an operating system for controlling the laundry treating apparatus as well as the recommendation formula. The laundry treating apparatus of the present invention may be provided to exchange and update the recommendation formula of the storage unit if the recommendation formula is transferred from the communication module.

That is, the controller may exchange and update only the recommendation formula of the storage unit if the recommendation formula is transferred from the communication module. Therefore, since the operating system may not be exchanged, the recommendation formula may be updated quickly and easily.

Meanwhile, the communication module may be provided to transfer one or more of area information of an area where the laundry treating apparatus is located and the recommendation formula to the controller by performing communication with the server or the external terminal. The laundry treating apparatus of the present invention may comprise a power supply unit for supplying a power source to the controller and the communication module, and the power supply unit may be provided to always supply the power source to the communication module even though the course or option performed by the laundry treating apparatus ends.

That is, as the power source is always supplied to the communication module, the communication connection state of the communication module with the server or the external terminal may be maintained. The communication module may be provided to immediately transfer the area information to the controller if the power supply unit supplies the power source to the controller. That is, the communication module may receive the area information while the controller is being booted without separate loading time or connection time, and may provide the area information to the controller. Therefore, the controller may recommend the course or option by immediately reflecting the area information in the recommendation formula.

Meanwhile, the communication module may be provided to periodically store the area information that may be substituted for the recommendation formula.

Therefore, the communication module may skip to again receive the area information even though the power source is input to the controller, and may provide the area information, which is previously stored, to the controller. As a result, the user may quickly be recommended a course or option without separate delay if the user inputs the recommendation request unit.

Meanwhile, the recommendation request unit may include one or more of a camera for recognizing the user's action and a microphone for recognizing the user's voice. Therefore, if the user's specific action is recognized through the camera or the user's specific voice is recognized through the microphone, the same effect as that the recommendation request unit is input may be obtained.

In still another aspect, to achieve the objects of the present invention, a control method of a laundry treating apparatus as defined in claim 12 is provided.

Also, the control method may further comprise a checking step of checking whether a use history of a specific user who uses the laundry treating apparatus is stored in the controller.

The computing step may include a reflection computing step of recommending the course or option by reflecting the use history in the recommendation formula if the use history of the specific user is stored in the controller in the checking step, and an initial computing step of recommending the course or option by reflecting only a use history of the random user in the recommendation formula if there is no use history of the specific user.

After the recommending step, the control method may further comprise a grant sensing step of sensing an input of the operation unit, a basic course option inputting step of sensing whether a basic course or option different from the recommended course or option is input, and a storing step of storing the used course or option in the controller if the step of performing the course or option ends.

In further still another aspect of the present invention (not being claimed), a control method of a laundry treating apparatus comprises an acknowledging step of checking whether the server has received area information; an input sensing step of sensing an input of the recommendation request unit; a computing step of determining the course or option to be recommended in the controller through a use prediction formula if the recommendation request unit is input; a recommending step of displaying the determined course or option to be recommended on the display unit; a grant step of sensing whether the operation unit is input; and a step of performing the course or option determined by the input of the operation unit.

The computing step may include a basic computing step of determining the course or option to be recommended using only the use prediction formula if the area information is not received from the server. Also, the computing step may include a reflection computing step of controlling the course or option to be recommended by reflecting area information if the area information is received from the server.

The control method may further comprise a communication connection identifying step of identifying whether the communication module is connected with the server by communication if the area information is not received in the acknowledging step.

The control method may further comprise additional receiving step of receiving the area information if the communication connection is sensed, and the input sensing step may be performed if the communication connection is not sensed.

The control method may further comprise a basic course option inputting step of sensing whether a basic course or option is input such that the recommended course or option is not performed in the grant step, and the grant step of sensing the input of the operation unit may be performed if the basic course option inputting step is performed.

The control method may further comprise a storing step of storing a use history of the performed course or option in the controller if the step of performing the course or option ends.

In further still another embodiment an online system comprises a server for providing recommendation information, which may recommend any one course or option through a use history of a user from random courses or random options for setting additional condition of the course; a laundry treating apparatus including a communication module for receiving the recommendation information, a controller for determining any one course or option of the random courses and the random options through the recommendation information, and a display unit for displaying the determined course or option, to perform a recommendation function of recommending a course or option; and an external terminal for remotely controlling the laundry treating apparatus by performing communication with the server, wherein the laundry treating apparatus or the external terminal is provided to permit or prohibit transmission of the use history of the user to the server.

Therefore, personal information may be prevented from being released without notice, whereby personal rights may be prevented from being infringed.

According to the present invention, a course and option customized for a user may be provided using deep learning (deep neural network).

According to the present invention, the laundry treating apparatus may compute and recommend a course and option customized for a user.

According to the present invention, a course and option customized for a user may be provided even though the laundry treating apparatus is connected with a server and an external terminal by communication.

According to the present invention, a course and option customized for a user can be recommended through a recommendation formula obtained by deep learning even without a use history of a specific user.

According to the present invention, a course and option customized for a user can be recommended immediately if a recommendation request is input.

According to the present invention, the laundry treating apparatus can periodically receive information from a server or external terminal as a power source is always supplied to a communication module built in the laundry treating apparatus.

According to the present invention, a course and option customized for a user can be recommended through a use history of a laundry treating apparatus used by a user, whereby convenience is provided to the user such that the user may not select a course and option separately.

According to the present invention, a laundry treating apparatus and its system can be provided, which can automatically be varied to a frequently used option with respect to a specific time zone, a specific day, a specific weather condition, etc. even though a user does not edit an option function every time.

According to the present invention, a laundry treating apparatus and its system can be provided, which can prevent a user from artificially inputting or downloading information.

According to the present invention, a course and option customized for a user can automatically be recommended by recognizing a pattern of a user's course and option even though an environment where the user is located is varied.

According to the present invention, a course and option predicted to be used by a specific user can be recommended by analyzing a use history of a random user.

According to the present invention, a course and option predicted to be used by a specific user can be recommended by analyzing a use history of the specific user.

According to the present invention, an optimized course and option can be recommended by reflecting weather information in histories of users.

According to the present invention, an optimized course and option can be recommended by reflecting atmospheric information in histories of users.

According to the present invention, an optimized course and option can be recommended by reflecting water information, earthquake occurrence information, and information on electric charges per time zone in histories of users.

According to the present invention, a course and option customized for a user may actively be provided to maximize convenience of the user.

According to the present invention, an optimized course and option may be explained through an external terminal, which can perform communication with a laundry treating apparatus, whereby reliability may be obtained.

According to the present invention, an optimized course and option may be provided by identifying a user's schedule through an external terminal.

According to the present invention, time, date, and day, which enable an optimized course customized for a user for a certain time period, can be recommended through an external terminal.

It is to be understood that both the foregoing general description and the following detailed description of the present invention are exemplary and explanatory and are intended to provide further explanation of the invention as claimed.

The accompanying drawings, which are included to provide a further understanding of the invention and are incorporated in and constitute a part of this application, illustrate embodiment(s) of the invention and together with the description serve to explain the principle of the invention. In the drawings:
FIG. 1 illustrates a laundry treating apparatus according to the embodiment of the present invention;
FIG. 2 illustrates a configuration of a laundry treating apparatus according to the present invention;
FIG. 3 illustrates a control panel of a laundry treating apparatus according to the present invention;
FIG. 4 illustrates an embodiment of a laundry treating apparatus operated by action and voice;
FIG. 5 illustrates an operation procedure of a control panel;
FIG. 6 illustrates another operation procedure of a control panel;
FIGS. 7 to 9 illustrate another embodiment of a control panel;
FIG. 10 illustrates a basic structure of an online system according to the present invention;
FIG. 11 illustrates a communication method of an online system according to the present invention;
FIG. 12 illustrates a communication connection method of a communication module according to the present invention;
FIG. 13 is a block diagram illustrating a laundry treating apparatus according to the present invention;
FIG. 14 illustrates deep learning or machine learning structure of an online system according to the present invention;
FIG. 15 illustrates a detailed embodiment of a deep learning of an online system according to the present invention;
FIG. 16 illustrates an embodiment for providing a course and option customized for a user in accordance with a user's pattern through a use prediction formula;
FIGS. 17 to 20 illustrate an embodiment for controlling a course and option by reflecting area information;
FIGS. 21 to 25 illustrate an embodiment for controlling a laundry treating apparatus by interworking with an external terminal;

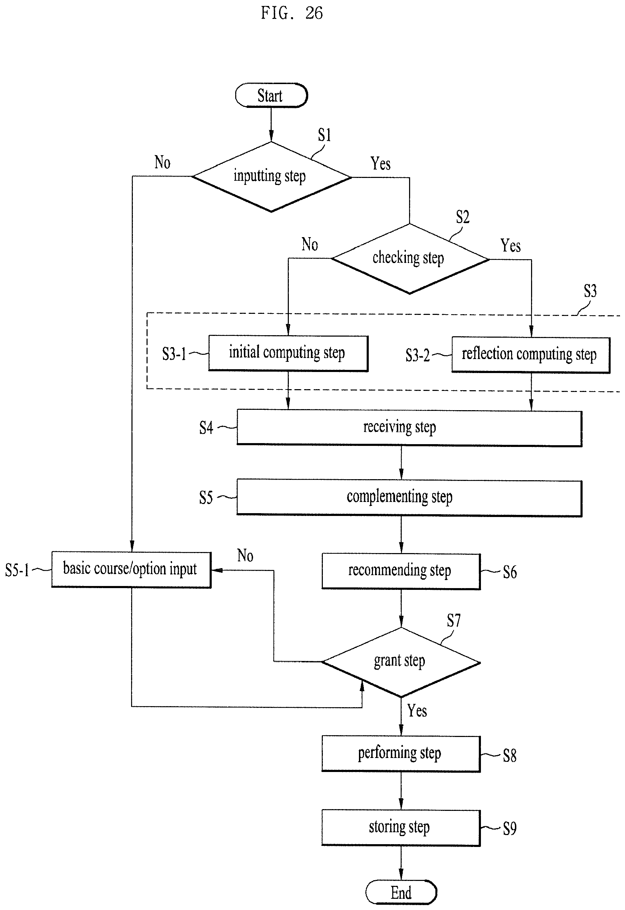

FIG. 26 illustrates a control method of a laundry treating apparatus according to one embodiment of the present invention; and
FIG. 27 illustrates a control method of a laundry treating apparatus according to another embodiment of the present invention.

Reference will now be made in detail to the preferred embodiments of the present invention, examples of which are illustrated in the accompanying drawings. Wherever possible, the same reference numbers will be used throughout the drawings to refer to the same or like parts and their description will be replaced with the first description. The term of a singular expression in this specification should be understood to include a multiple expression as well as the singular expression if there is no specific definition in the context. Also, in description of the embodiment disclosed in this specification, if detailed description of elements or functions known in respect of the present invention is determined to make the subject matter of the present invention unnecessarily obscure, the detailed description will be omitted. Also, it is to be understood that the accompanying drawings are intended to easily understand the embodiment disclosed in this specification.

A laundry treating apparatus generally provides various courses and options suitable for users' convenience. The course may include a course used in a washing machine and a drying course used in a dryer.

Although the following description will be given based on the course applied to a washing machine, it is to be understood that the course may also include a drying course used in a dryer.

The course includes a series of driving through a laundry treating apparatus, which includes a washing cycle for removing particles of laundry, a rinsing cycle for detaching particles of laundry from a detergent, and a dehydrating cycle for removing water of laundry. The course may be an algorithm or control method set to perform washing of laundry from beginning to end. At this time, the course may also include a drying cycle.

That is, the course may include a random course for providing a series of control methods for performing at least any one of a washing cycle for removing particles of laundry and a drying cycle for drying laundry in which water is contained.

Also, an option of the course may be an algorithm or control method set to control at least one or more of repetition times of each cycle in performing a washing cycle, rinsing cycle and a dehydrating cycle, strength in performing each cycle, rpm of a drum when each cycle is performed, water temperature and water level, steam supply or not, and a sustain time of each cycle.

That is, the option may include a random option for setting additional condition of the course.

A user may use a course and an option, which are basically provided by the laundry treating apparatus, as they are, and may perform washing of laundry by directly controlling a course and option suitable for himself/herself in accordance with the amount of laundry, a material of laundry, a current weather, and a schedule.

However, the user may not be lack of understanding of various courses and options, and may feel inconvenience in selecting a course and option every time.

The user may not know what course and option should be set in his/her situation, and considerable time may be required in identifying and selecting the course and option, whereby a full washing cycle may be delayed.

Even though the laundry treating apparatus provide various courses and options, the user may fail to use the courses and options properly or give up the use of the courses and options due to inconvenience.

Therefore, if the laundry treating apparatus may recommend a required course or option at a current time by previously identifying or predicting the user's intention, the user's convenience may be maximized. Also, since there is no time delay when the user selects a course or option, quick washing may be performed.

Moreover, if a course or option customized for the user may be provided automatically at a specific time, a specific place, a specific day and a specific weather through a past history of the user, the user's course or option may be selected optimally.

To this end, instead of recommending a unified or fragmented course or option for the user, it is required to actively recommend a customized course or option set fully considering daily pattern of the user, weather, atmospheric pollution information, information of family members and washing use pattern, and washing use pattern of another user in a condition similar to that of the user. In other words, it is required to provide the course or option customized for the user like that the laundry treating apparatus recognizes the user's intention or the user's situation.

To this end, deep learning or machine learning technology may be applied to the laundry treating apparatus and the system comprising the same. The deep learning may mean that data are expressed as a vector or graph, which can be processed by a specific entity having a computer (controller) and a model for learning the data is constructed. The deep learning may mean that a computer discovers a pattern of huge data, which is sorted based on various references and can perceive, infer and determine the data by itself even without any determination reference.

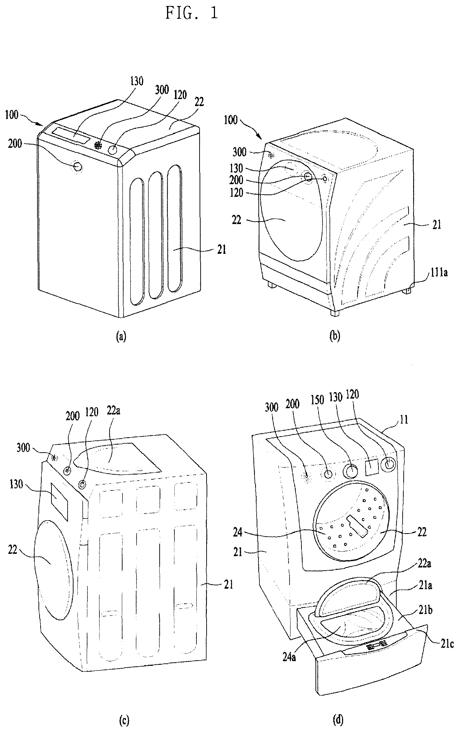

FIG. 1 illustrates various embodiments of a laundry treating apparatus 20, which can perform a function for providing a course and option customized for a user by using the deep learning technology.

The laundry treating apparatus 20 of the present invention may comprise a cabinet 21 having an opening and forming an external appearance, and a door 22 for opening or closing the opening. The door 22 and the opening correspond to portions where laundry is inserted into or taken out of a tub received in the cabinet 21.

The laundry treating apparatus of the present invention may be provided in a top load type in which the opening and the door 22 are provided on the cabinet 21 (see FIG. 1a), or may be provided in a front load type in which the opening and the door 22 are provided at the front of the cabinet 21 (see FIG. 1b).

Also, the laundry treating apparatus of the present invention may be provided in such a manner that a front type laundry treating apparatus and a top load type laundry treating apparatus are stacked, wherein the front type laundry treating apparatus may perform washing and drying of laundry. In other words, according to the laundry treating apparatus 20 of the present invention, the top load type laundry treating apparatus may be provided in one cabinet 21 at an upper portion of the front type laundry treating apparatus (see FIG. 1c), and the top load type laundry treating apparatus may be provided below the front type laundry treating apparatus (see FIG. Id).

The laundry treating apparatus 20 of the present invention may include a cabinet 21 and doors 22 and 22a for opening or closing the cabinet 21, and may include a control panel 100 for operating the laundry treating apparatus 20, a display unit 130 for displaying a state of the laundry treating apparatus, and a power supply unit 120 for input a power source to the laundry treating apparatus.

Also, the laundry treating apparatus of the present invention may further include a microphone 300 for recognizing a user's voice, and a camera 200 for recognizing the user's action.

The laundry treating apparatus may recognize that a child enters the cabinet 21 through the microphone 300 and the camera 200 and then notify the user of the recognized fact or unlock the door 22, whereby a dangerous situation may be avoided.

The microphone 300 and the camera 200 may recognize the user's voice or action and store the voice or action.

Also, the voice and action may be used such that the user may perform a specific course and option of the laundry treating apparatus or may be used to be recommended for a customized course and option. Details will be described later.

The control panel 100 may include a recommendation unit 180 selected for the laundry treating apparatus to recommend at least any one of course and option specialized for the user, and an input unit 150 for allowing the user to directly input at least any one of the course and option which will be performed by the laundry treating apparatus.

Also, the control panel 100 may include the display unit 130. In this case, the control panel 100 may be provided as a full-touch display, whereby functions of the display unit 130 and the input unit 150 may be performed at the same time (see FIG. 1b).

Also, the display unit 130 and the input unit 150 may be provided separately in the control panel 100, whereby the display unit 130 may be provided as a display liquid crystal and the input 150 may be provided as a separate button (see FIGS. 1a, 1c and 1d).

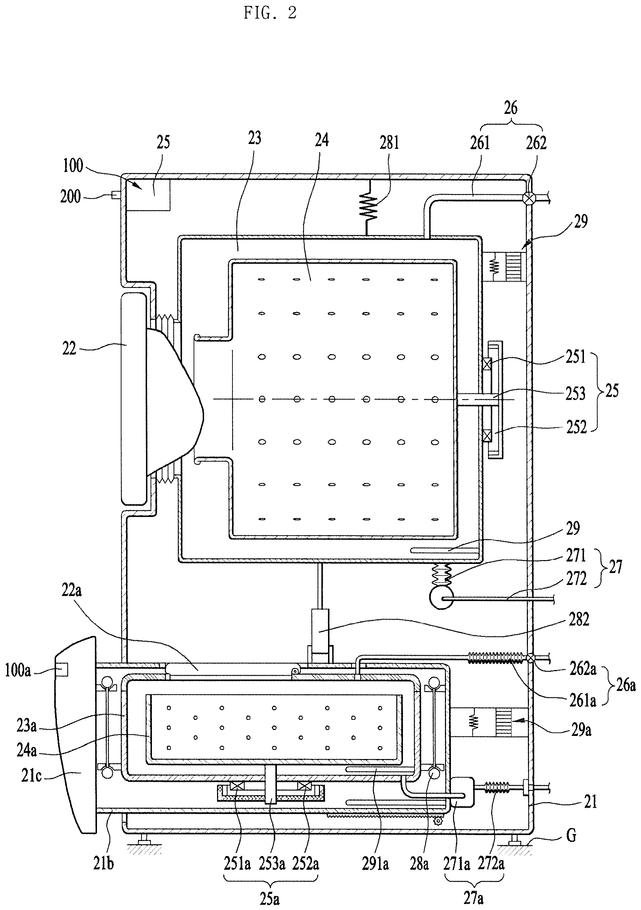

FIG. 2 illustrates a detailed configuration of the laundry treating apparatus 20 of the present invention. In detail, FIG. 2 illustrates a detailed configuration of the laundry treating apparatus of FIG. Id. When the laundry treating apparatus of the present invention may be provided in a structure of a front load type laundry treating apparatus or a top load type laundry treating apparatus, or a stacked structure of a front load type treating apparatus and a top load type laundry treating apparatus, it is to be understood that the basic configuration of FIG. 2 is selectively applied to the laundry treating apparatus of the present invention.

That is, although FIG. 2 illustrates the structure of FIG. Id to avoid repeated description, another structure may be provided if the function of the laundry treating apparatus may be performed.

Referring to FIG. 2, the laundry treating apparatus 20 of the present invention may include a cabinet 21 for forming an external experience, a tub 23 provided inside the cabinet 21, storing water, a drum 24 rotatably provided in the tub 23, a driver 25' coupled to the tub 23, rotating the drum 24, a water supply unit 26 for supplying water to the tub 23, and a drainage unit 27 for draining water of the tub 23.

Also, the laundry treating apparatus 20 of the present invention may further include a hot-air supply unit or heater 29 for supplying the hot-air to the tub 23, and may include an inlet of the tub 23 and a door 22 for opening or closing the opening of the cabinet 21.

The water supply unit 26 may include a water supply valve 262 and a water supply pipe 261, and the drainage unit 27 may include a drainage pump 271 and a drainage pipe 272.

The driver 25 may include a stator 251 coupled to the tub 23, generating a rotation electric field, a rotor 252 rotated by the rotation electric field, and a rotational shaft 253 rotated together with the rotor 252, rotating the drum 24.

The tub 23 may be supported by a support unit 28 of the cabinet 21, and its vibration may be attenuated by the support unit 28 of the cabinet 21. The support unit 28 may include a damper 282 and a spring 281, which connect the cabinet 21 with the tub 23 to attenuate vibration.

Meanwhile, if the laundry treating apparatus 20 of the present invention is provided as a composite laundry treating apparatus, the laundry treating apparatus 20 may include a second tub 23a provided below or above the tub 23, storing water, a second drum 24a rotatably provided inside the second tub 23, a second driver 25a coupled to the second tub, rotating the second drum 24a, a second water supply unit 26a for supplying water to the second tub 23a, and a second drainage unit 27a for draining water to the second tub 23a.

If the laundry treating apparatus 20 is provided in a top load type in which the second tub 23a is provided below the tub 23, the second tub 23a may be provided to be received in a drawer 21b provided to be inserted into or taken out of the cabinet 21.

The second water supply unit 26a may include a second water supply valve 262a and a second water supply pipe 261a, and the second drainage unit 27a may include a second drainage pump 271a and a second drainage pipe 272a.

The second driver 25a may include a second stator 251a coupled to the second tub 23a, generating a rotation electric field, a second rotor 252a rotated by the rotation electric field, and a second rotational shaft 253a rotated together with the second rotor 252a, rotating the second drum 24a.

The second tub 23a may be supported by a second support unit 28a of the cabinet 21, and its vibration may be attenuated by the second support unit 28a of the cabinet 21.

The drivers 25 and 25a, the water supply units 26 and 26a, the drainage units 27 and 27a and the hot-air supply unit 29 may repeatedly be driven or stopped in accordance with any one of course and option set to the control panel 100 or the controller 400 of the laundry treating apparatus.

For example, in accordance with the input course and option, the water supply valves 261 and 261a may be opened, the drivers 25 and 25a may be rotated, and the drainage pumps 271 and 271a may be driven.

Meanwhile, the laundry treating apparatus 20 of the present invention may further include a communication module 60 which may perform communication with at least any one of server 10, an external terminal 40 and an external system 50, which will be described later.

The control panel 100 that may provide any one of a customized course and option through the laundry treating apparatus 20 may be provided at the front or upper portion of the cabinet 21.

If the laundry treating apparatus 20 of the present invention is provided as a composite laundry treating apparatus, the control panel 100 may be provided to be divided into a control panel 100 for controlling the upper laundry treating apparatus and a second control panel 100a for controlling the lower laundry treating apparatus.

Of course, the laundry treating apparatus 20 of the present invention may be provided to include one control panel 100 for controlling the composite laundry treating apparatus.

The laundry treating apparatus of the present invention may include a recommendation request unit 180 provided to be recommended for at least any one of any one course and option of a random option for controlling the number of times and strength for driving the driver, the water supply valve, and the drainage pump, and a controller 400 provided to determine at least any one of a course and an option, which will be recommended for the user if the recommendation request unit is input and drive at least any one of the driver, the water supply value and the drainage pump in accordance with at least any one of the recommended course and option.

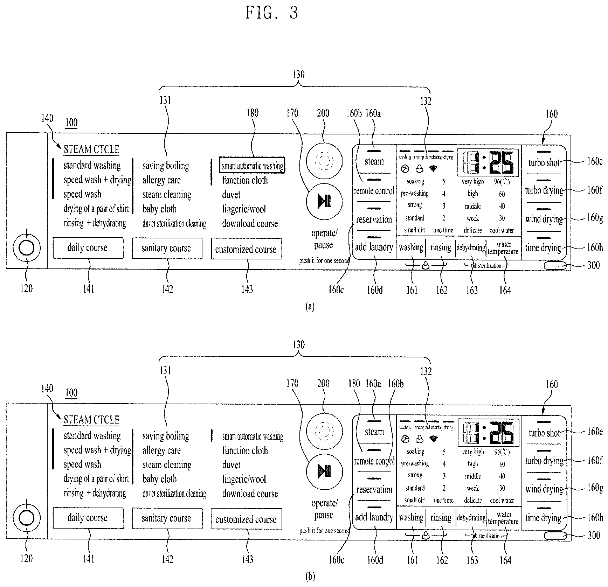

FIG. 3 illustrates one embodiment of a control panel 100 provided in a laundry treating apparatus 20 according to the present invention.

The control panel 100 may include the input unit 150 for receiving a command for driving the laundry treating apparatus, and the display unit 130 for displaying the state of the laundry treating apparatus.

Also, the control panel 100 may further include a power supply unit 120 notified to supply a power source to the laundry treating apparatus and an operation unit 170 for receiving a command to start or stop the operation of the laundry treating apparatus 20.

Since the input unit 150 receives a series of input commands for driving the laundry treating apparatus, the input unit 150 may further include the power supply unit 120 and the operation unit 170.

At this time, the display unit 130 may be provided as a display panel, and the input unit 150 may be provided as a button that may be input separately.

The input unit 150 may include a course selection unit 140 provided to receive an input for selecting any one of random courses for performing a series of washing cycles including washing, rinsing and dehydrating cycles of the laundry treating apparatus 20, and an option selection unit 160 provided to receive an input for selecting any one of random options for controlling strength and level of the course.

For example, the course may be categorized into a first course provided with a washing method or set for removing particles of general laundry, a second course provided with a washing method or set for performing sterilization of the laundry, and a third course provided with a washing method or set for removing particles considering material of the laundry.

Also, the option may be categorized into a first option for controlling washing strength in the selected course, a second option for controlling rinsing times, a third option for controlling dehydrating strength, and a fourth option for determining a water temperature of the tub for receiving laundry and water therein. The control of the washing strength and the dehydrating strength may mean that rpm of the drum, rotation direction change cycle of the drum, etc. are controlled during the washing cycle and the dehydrating cycle.

The categorization of the course and the option are only examples, and various modifications may be made in the categorization.

The first course indicates a general course for washing laundry, and may be referred to as a daily course. The second course indicates a course related to sterilization, and may be referred to as a sanitary course. The third course indicates a course that considers material of laundry, the amount of laundry, etc., and may be referred to as a customized course.

The course selection unit 140 may be provided to select courses repeatedly input to be sequentially set or displayed.

The course selection unit 140 may include a first course selection unit 141 provided to select any one of the first course, a second course selection unit 142 provided to select any one of the second course, and a third course selection unit 142 provided to select any one of the third course.

In the same manner as the course selection unit 140, the option selection unit 160 may also be provided to select the courses repeatedly input to be sequentially set or displayed. Also, the option selection unit 160 may include a first option selection unit 161 for controlling washing strength in the selected course, a second option selection unit 162 for controlling rinsing times, a third option selection unit 163 for controlling dehydrating strength, and a fourth option selection unit 164 for determining a water temperature of the tub for receiving laundry and water therein. The option selection unit 160 may be provided to sequentially input the respective option selection units, thereby selecting a desired option.

The display unit 130 may be provided as a display liquid crystal, or may be provided as a lamp for reflecting light, a speaker for emitting sound, or the like. The display unit 130 may include a first display unit 131 for displaying a course selected by the course selection unit 140, and a second display unit 132 for displaying an option selected by the option selection unit 160.

The first display unit 131 may be provided to display the selected course. For example, a portion corresponding to the selected course may be lighted, or a title of the course may be displayed on the display unit.

The first display unit 131 may be provided to display the selected option. For example, a portion corresponding to the selected option may be lighted, or a title of the option may be displayed on the display unit.

The display unit 130 may further include a third display unit for displaying the state of the laundry treating apparatus 20. The third display unit may share the portion where the first display unit 131 is displayed with the portion where the second display unit 132 is displayed, and may display the portions.

In detail, the first display unit 131 may be provided to light the corresponding course input by the course selection unit 140, or may be provided to display the corresponding course input by the course selection unit 140 or emit the corresponding course as a sound. That is, the first display unit 131 may be provided as a display panel, or may be provided as a lamp lighted next to text corresponding to the course. If the user clicks the daily course 141, the general courses are sequentially lighted, whereby the corresponding course may be recognized for the user.

Also, if the user clicks the sanitary course, the courses corresponding to the sanitary course may sequentially be lighted, and if the user clicks the customized course, the courses corresponding to the customized course may sequentially be lighted.

The second display unit 132 may be provided to light the option input by the option selection unit 160, or may be provided to display the corresponding option input by the option selection unit 160 on the liquid crystal or emit the corresponding option as a sound.

The second display unit 132 may be provided as a display panel, or may be provided as a lamp lighted next to text corresponding to the option.

The option selection unit 160 may repeatedly be clicked or touched, whereby the first, second, third and fourth options may sequentially be lighted. As a result, the user may select a desired option.

Meanwhile, the option selection unit 160 may further include a switch or touch area that can perform additional function for the laundry treating apparatus 20 in addition to washing, rinsing, dehydrating and water temperature.

The option selection unit 160 may further include a steam controller 160a for adding an option for steam supply to the inside of the laundry treating apparatus 20, a reservation unit 160c for previously determining an operation time of the laundry treating apparatus 20, an additional setup unit 160d for clicking for addition of laundry during operation of the laundry treating apparatus 20, a turbo unit 160e for adding an option for forming a strong water flow by instantaneously increasing rpm of the drum, a turbo drying unit 160f for adding an option for supplying a strong hot-air, a wind drying unit 160g for adding an option for supplying a warm-air or a cool-air not a hot-air, and a time drying unit 160h for adding an option for performing natural drying by rotating only the drum at a certain speed.

The control panel 100 may be provided in all types if the control panel 100 includes the input unit 150 for receiving a command for driving the laundry treating apparatus and the display unit 130 for displaying the state of the laundry treating apparatus.

The control panel 100 may further include the controller 400 that may operate the laundry treating apparatus 20 by recognizing information input to the input unit 150 or select information to be displayed on the display unit 130. The controller 400 may be provided to control the communication module 25.

Meanwhile, the laundry treating apparatus 20 may further include a recommendation request unit 180 selected to be recommended for any one of the course and the option.

The recommendation request unit 180 may be provided in the input unit 150. If the recommendation request unit 180 is input, the controller 400 of the laundry treating apparatus 20 may recommend a course and option customized for the user who has input the recommendation request unit 180, by using a use prediction structure formula, at the time when the recommendation request unit 180 is input.

If the recommendation request unit 180 is input, the laundry treating apparatus 20 may recommend a course and option predicted to be used by the user, who has input the recommendation request unit 180, or determined to be suitable, by using the recommendation formula calculated through deep learning (DNN) in the aforementioned system and area information provided by the external system 50.

If the recommendation request unit 180 is input, at least any one of the course and option may be displayed on the display unit 130.

The recommendation request unit 180 may be provided as an area that may touch the control panel 100 or a switch 171 that may physically be pressurized. Therefore, the user may be recommended for at least any one of the course and option by directly inputting the recommendation request unit 180.

Also, the recommendation request unit 180 may be provided to be indirectly selected by inputting the course selection unit 140 or the option selection unit 160. Therefore, the user may be recommended for at least any one of the course and option by inputting at least one of the course selection unit 140 and the option selection unit 160.

FIG. 3a illustrates that the recommendation request unit 180 is indirectly selected and enabled. The recommendation request unit 180 may be provided to be input or selected through the course selection unit 140. The recommendation request unit 180 may be selected by touch or click of any one of the course selection unit 140, whereby the user may determine a desired course or option.

For example, the recommendation request unit 180 may be provided in the customized course 143 in the words, such as "smart care", implicated or set to provide the user with the course and option customized for the user. In this case, the user may click or touch the third course selection unit until the recommendation request unit 180 is lighted or enabled. As a result, the user may be recommended for a customized course and option from the laundry treating apparatus 20. The user may enable the control panel 100 by inputting the power supply unit 120. The user may touch the course selection unit 140 to select the recommendation request unit 180.

If the recommendation request unit 180 is selected, the recommended course and option may be displayed on the course display unit 131 and the option display unit 132.

For example, the recommended course may be lighted on the course display unit 131, and the recommended option may be lighted on the option display unit 132. Also, if the control panel 100 is provided as a display panel, the recommended course may be displayed on the course display unit 131, and the recommended option may be displayed on the option display unit. As a result, the user may identify the recommended course and option.

The user may grant the recommended course and option by touching or inputting the operation unit 170. That is, the control panel 100 may finally identify and grant the course and option input by the user or the recommended course and option and then input the operation unit 170 to operate the laundry treating apparatus in accordance with the course and option. The operation unit 170 may be provided as a separate switch, or may be provided to be enabled or input if the user touches a specific portion of the control panel 100. The operation unit 170 may serve as a pause button through a touch once more.

Also, the user may additionally select the course selection unit 140 and the option selection unit 160 to finally select a desired course and option if the user desires to select or add another option to the recommended course. Afterwards, the user may touch or input the operation unit 170 so that at least one of the final course and option may be performed by the laundry treating apparatus 20.

FIG. 3b illustrates that the recommendation request unit 180 is provided as a direct touch area or button. The recommendation request unit 180 may be provided as an independent switch or touch area on the control panel 100.

For example, the recommendation request unit 180 may be provided in the option selection unit 160 as a switch type or touch area named "smart automatic". The user may be recommended for at least one of a customized option and course by directly touching or clicking the recommendation request unit 180.

Meanwhile, if the recommendation request unit 180 is provided in the option selection unit 160, the recommendation request unit 180 may be provided at a portion where the remote control 160b is input. Therefore, if the recommendation request unit 180 is input, the laundry treating apparatus 20 may recommend the course and option customized for the user. If the recommendation request unit 180 is input for a certain time or more, the remote control is enabled, whereby the laundry treating apparatus 20 may be connected with the external terminal 40 by communication.

This is because that the remote control 160b and customized recommendation are common in that the server 10 and the external terminal 40 may perform communication with the laundry treating apparatus 20. As the recommendation request unit 180 is input, the remote control 160b may be enabled, whereby the server 10 or the external system 50, the external terminal 40 and the laundry treating apparatus 20 may give and take information.

If the user inputs the power supply unit 120, the control panel 100 may be enabled. If the user inputs the recommendation request unit 180, the recommended course and option may be displayed on the course display unit 131 and the option display unit 132. The user may be recommended for the course and option by directly inputting the recommendation request unit 180. Afterwards, if the user likes the recommended course and option, the user may grant the recommended course and option by inputting the operation unit 170.

If the user does not like the recommended course and option, the user may select a final course and option by inputting the course selection unit 140 and the option selection unit 160. Afterwards, the user may input the operation unit 170 to allow the laundry treating apparatus 20 to perform the final course and option. The course and option performed by the laundry treating apparatus may be stored in the controller 400 and then may be used when next course and option are recommended.

Meanwhile, the laundry treating apparatus 20 may further include a camera 200 for recognizing the user's action. The controller 400 may recognize the user's action through the camera, and may operation the laundry treating apparatus 20 by recognizing meaning included in the user's action.

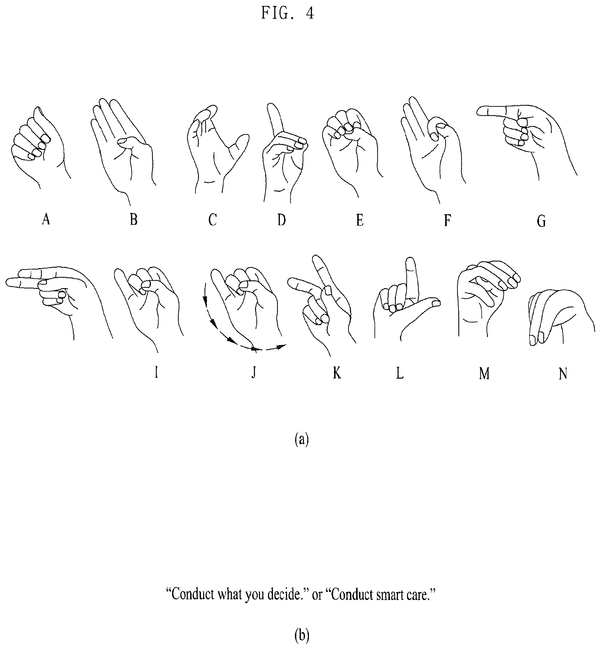

The user's specific action is stored in the controller 400, and a control command corresponding to the specific action may be stored in the controller 400 (see FIG. 4a). Therefore, if the user performs a specific hand action in front of the laundry treating apparatus 20, the controller 400 may perform a command corresponding to the specific action by recognizing the specific action through the camera 200.

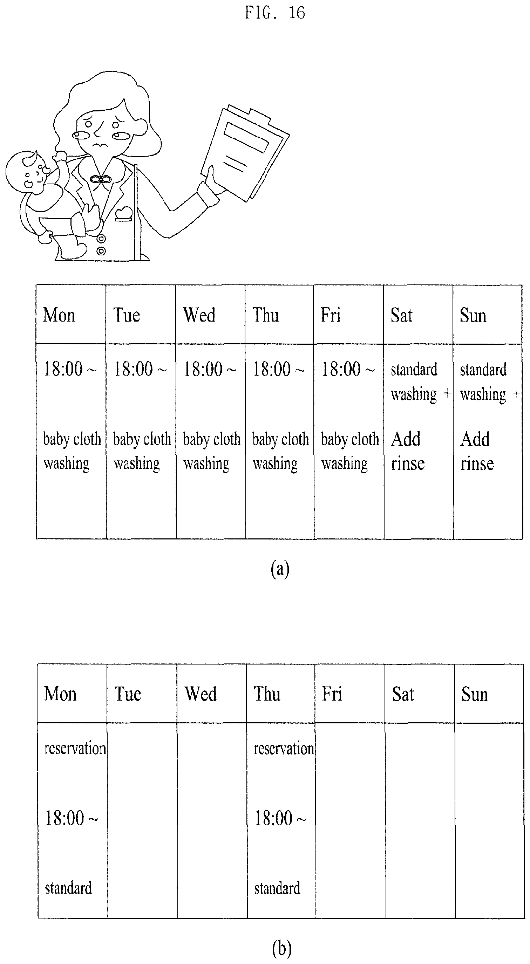

For example, any one of hand actions of the user of the laundry treating apparatus 20 Oshown in FIG. 16 may correspond to an input action of a customized course and option recommended by the laundry treating apparatus 20. In other words, the camera 200 may serve as the recommendation request unit 180. If the specific action is input to the camera 200 and recognized by the camera 200, the same effect as the input of the recommendation request unit 180 may be devised. As a result, it may be regraded that the recommendation request unit 180 includes the camera 200.

If the user desire to be recommended for the customized course and option, the user may perform the hand action in front of the camera 200. Then, the laundry treating apparatus 200 may recommend the customized course and option by recognizing meaning of the hand action through the camera 200.

Also, the controller 400 may recognize that a specific action is repeatedly performed through input of use prediction formula B and learning when at least one of the customized course and option is recommended even though the command corresponding to the above action and operating the laundry treating apparatus is not stored. Therefore, the controller 400 may recognize the specific action to be the same as the input of the recommendation request unit 180. The laundry treating apparatus 20 may lean the user's action through deep learning technology.

Also, the laundry treating apparatus 20 may further include a microphone 300 for recognizing or receiving the user's voice. The controller 400 may recognize the user's voice and operate the laundry treating apparatus 20 by recognizing meaning included in the user's voice.

Also, the user's specific voice may be stored in the controller 400, and a control command corresponding to the specific voice may be stored therein. For example, voice such as "please, take care of it yourself', "smart care, please" or "please recommend it" may be stored in the controller 400. Afterwards, if the controller 400 receives and recognizes the voice through the microphone 300, the recommendation request unit 180 may be input immediately, whereby at least one of the course and option may be recommended for the user. Therefore, it may be regarded that the recommendation request unit 180 includes the microphone 300.

Also, the controller 400 may use the deep learning technology to correspond the voice to a specific control command. That is, even though the user does not correspond the specific voice to the operation of the laundry treating apparatus individually, the controller 400 may recognize the voice generated when the user selects a specific course and option by using the use prediction formula B, and may correspond the voice to the specific course and option.

As a result, the controller 400 may regard that the recommendation request unit 180 is input by recognizing a specific voice uttered by the user through the microphone 300 through deep learning the specific voice generated when the customized course and option are recommended.

FIG. 4(b) illustrates an example of the voice. For example, if the user is recommended a course recommended by the laundry treating apparatus 20 while generating voice such as "please, take care of it yourself', "smart care, please" or "please recommend it", the controller 400 may receive and recognize the voice through the microphone 300 and derive meaning of the voice from the use prediction formula B. As a result, the recommendation request unit 180 may be input, whereby at least one of the customized course and option may be recommended for the user.

Meanwhile, the microphone 300 may be provided at one side of the control panel 100. This is because that the control panel 100 is the easiest place to be accessed by the user.

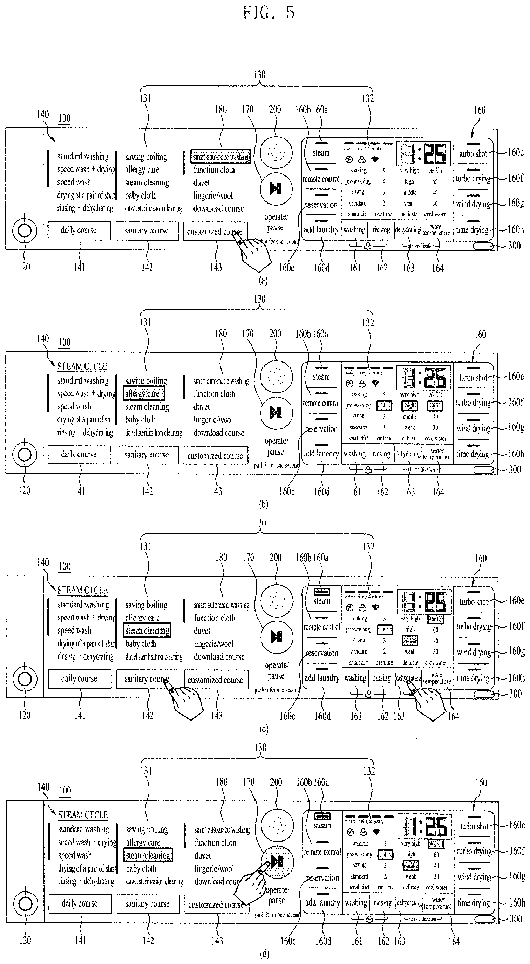

FIG. 5 illustrates a method for driving the laundry treating apparatus after the user is recommended at least one of a customized course and option through the recommendation request unit 180 when the recommendation request unit 180 is indirectly provided on the control panel 100 (see FIG. 3a).

Referring to FIG. 5a, after inputting the power supply unit 120, the user may repeatedly input the course selection unit, which can enable the recommendation request unit 180, to the control panel until the recommendation request unit 180 is lighted.

Referring to FIG. 5b, if the recommendation request unit 180 is enabled, the control panel 100 may display a course to be recommended on the first display unit 131 and display an option to be recommended on the second display unit 132 by using a deep learning method which will be described later.

For example, the control panel 100 may display an allergy care course and option for performing four rinsing times, dehydrating strength of high, and water temperature of 60°C on the display unit 130.

If the user determines that the recommended course or option is suitable, the user may input the operation unit 170 to allow the laundry treating apparatus to perform the recommended course and option (see FIG. 5d).

However, if the user determines that the recommended course or option is not suitable or additional course and option will be required, the user may add or set a desired course or option by inputting the course selection unit 140 and the option selection unit 160 (see FIG. 5c).

For example, the user may change the current course to a duvet course by inputting the course selection unit 140 to the control panel 100 and select an option for changing all of pre-washing, rinsing times, dehydrating strength and water temperature by inputting the option selection unit 160.

Afterwards, the user may input the operation unit 170 to allow the set course and option to be performed by the laundry treating apparatus 20.

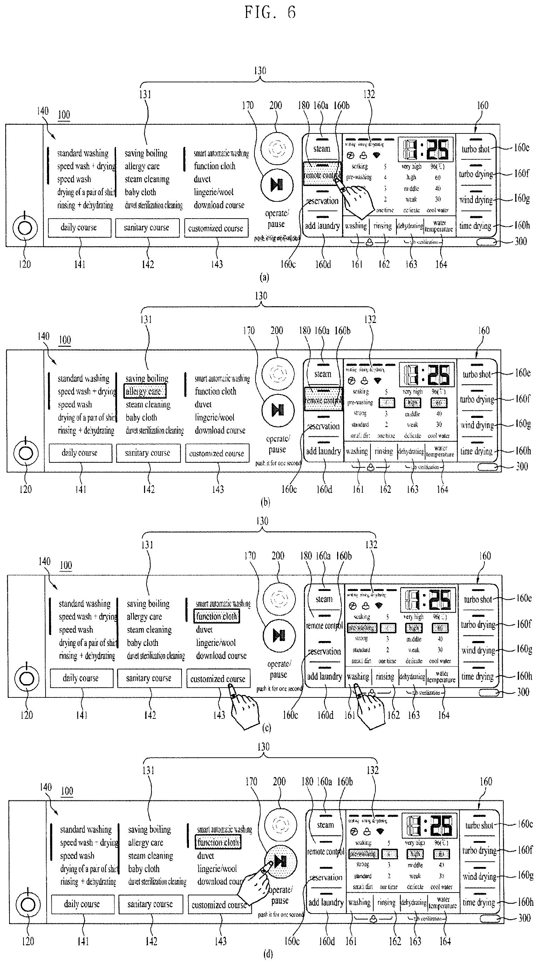

FIG. 6 illustrates a method for driving the laundry treating apparatus after the user is recommended at least one of a customized course and option through the recommendation request unit 180 when the recommendation request unit 180 is directly input to the control panel 100 (see FIG. 3b).

Referring to FIG. 6a, after inputting the power supply unit 120, the user may directly input the recommendation request unit 180.

Referring to FIG. 6b, if the recommendation request unit 180 is input, the recommended course or option may be displayed on the display unit 130 in accordance with the deep learning method which will be described later.

For example, if the controller 400 determines that a course and option suitable for the user are an allergy care course and an option of three rinsing times, dehydrating strength of medium, and water temperature of 60°C, the course and option may be displayed to be lighted on the display unit 130.

If the user determines that the course or option is suitable, the user may input the operation unit 170 to allow the laundry treating apparatus to perform the course and option.

Referring to FIG. 6c, if the user determines that the recommended course or option is not suitable or additional course or option will be required, the user may add or change a desired course or option by inputting the course selection unit 140 and the option selection unit 160.

For example, the user may change the allergy care course to a duvet course by inputting the course selection unit 140 or add an option for performing pre-washing and increasing rinsing times, dehydrating strength and water temperature.

Referring to FIG. 6d, the user may input the operation unit 170 to allow the changed or added course or option to be performed by the laundry treating apparatus 20.

Meanwhile, the control panel 100 may be provided as a display panel for full touch input. If the control panel 100 is provided as a touch panel which is a display panel for full touch input, the input unit 150, the power supply unit 120 and the operation unit 170 may be provided to be partitioned on a certain area of the control panel 100.

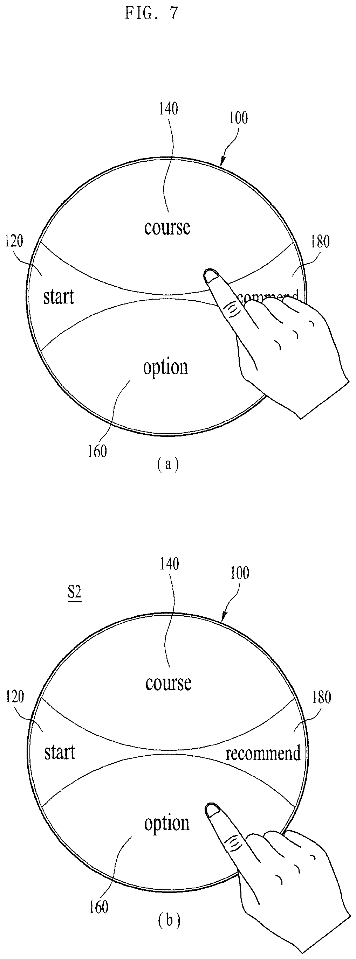

FIG. 7 illustrates that the control panel 100 is provided as a full touch display.

A front surface of the control panel 100 may be provided such that functions of the display unit 130 and the input unit 150 are performed at the same time. If the power supply unit 120 is input, the control panel 100 may be displayed in such a manner that the course selection unit 140, the option selection unit 160, the operation unit 170 and the recommendation request unit 180 are partitioned.

The user may set a desired course and option by directly inputting the course selection unit 140 (FIG. 7a) or inputting the option selection unit 160 (FIG. 7b).

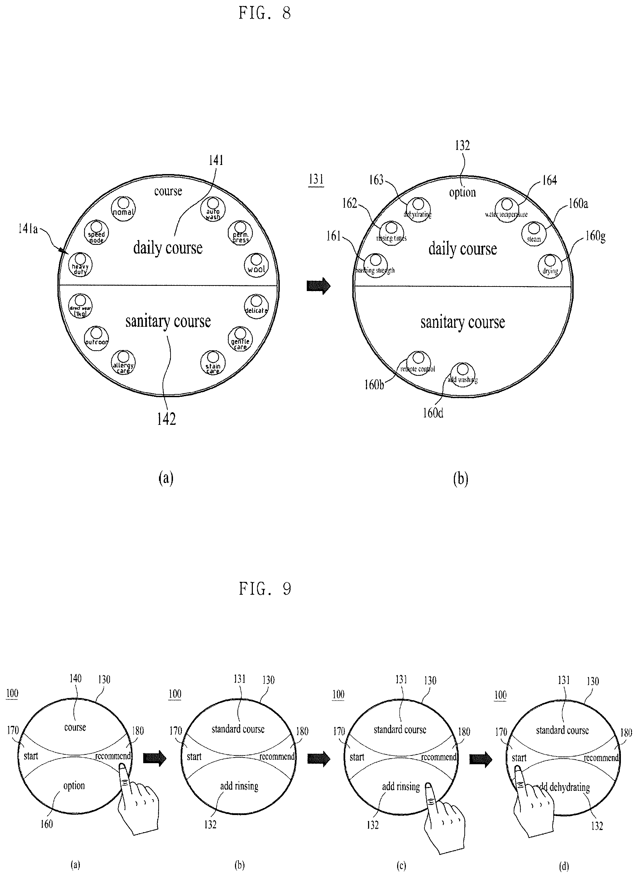

FIG. 8 illustrates that at least one of a course and option is selected through the control panel 100 provided as a touch display.

As shown in FIG. 7a, if the user inputs an area of the course selection unit 140, the screen of the control panel 100 may be switched to the first display unit 131 for displaying a course as shown in FIG. 8a. The course may be categorized into the first course, the second course and the third course as described above, and detailed courses constituting the course may be displayed on the first display unit 131 as icons.

The user may input and set a desired course among the icons displayed on the first display unit 131. Therefore, the first display unit 131 may also serve as the course selection unit 140.

For example, if the first course is provided as the aforementioned daily course and the second course is provided as the sanitary course, an area for displaying the course constituting the first course and an area for displaying the second course may be partitioned and displayed on the control panel 100.

Also, courses constituting the first course may be displayed on the area for displaying the first course as icons 141a, and courses constituting the second course may be displayed on the area for displaying the second course as icons.

The icons may correspond to various courses shown in FIG. 3 one to one.

If the user selects a desired course by inputting an icon, the screen of the control panel 100 is switched to the second display unit 132 for displaying an option, and icons 160a to 160g and 161 to 164 for selecting various options may be displayed on the second display unit 132. The icons may correspond to various options shown in FIG. 3 one to one (see FIG. 8b).

The user may set a desired option by inputting a desired icon among the icons displayed on the second display unit 132. As a result, the second display unit 132 may also serve as the option selection unit 160.

FIG. 9 illustrates that the user is recommended at least one of course and option through the control panel 100.

Referring to FIG. 9a, if the power supply unit 120 is input, the operation unit 170, the course selection unit 140, the option selection unit 160 and the recommendation request unit 180 may be partitioned and displayed on the control panel 100.

Referring to FIG. 9b, if the recommendation request unit 180 is input, the course selection unit 140 and the option selection unit 160 may be switched to the first display unit 131 and the second display unit 132. The recommended course may be displayed on the first display unit 131, and the recommended option may be displayed on the second display unit 132.

If the user determines that the recommended course or option is suitable, the user may input the operation unit 170.

However, if the user determines that the recommended course or option is not suitable or needs to be corrected, changed, or added, the user may set a desired course or option by inputting the first display unit 131 and the second display unit 132 (see FIG. 8).

Referring to FIG. 9d, the user may operate the laundry treating apparatus 20 in accordance with the set course and option by inputting the operation unit 170.

Meanwhile, the recommended course and option may be results through deep learning of use histories of course or option previously input or performed. The deep learning corresponds to the technology for categorizing similar patterns or rules from huge data. Therefore, in order that the deep learning technology is applied to the laundry treating apparatus, a history of various courses and options performed by a random user who uses the laundry treating apparatus at specific conditions including specific timing, specific time, specific date, specific day, and specific weather should be stored as big data.

Also, to provide a specific user with a customized course, a course and option used by the specific user should be stored as the big data.

In other words, if pattern and rule data of the course and option performed at specific timing, specific time, specific date, specific day, and specific weather are extracted through a use history of a course and option performed by one laundry treating apparatus, the use history may not be sufficient.

In other words, it may not be sufficient to perform deep learning through data of the use history. Therefore, the laundry treating apparatus provided by a manufacturer or seller needs to collect data related to the use history. To this end, the serve may need to collect data related to a use history through communication connection with a plurality of laundry treating apparatuses.

Also, in order that the server provides the laundry treating apparatus with a remote service such as deep learning, the laundry treating apparatus and the server may need to be provided to enable communication. A use prediction formula B which is the result of deep learning from the server may be stored in the laundry treating apparatus.

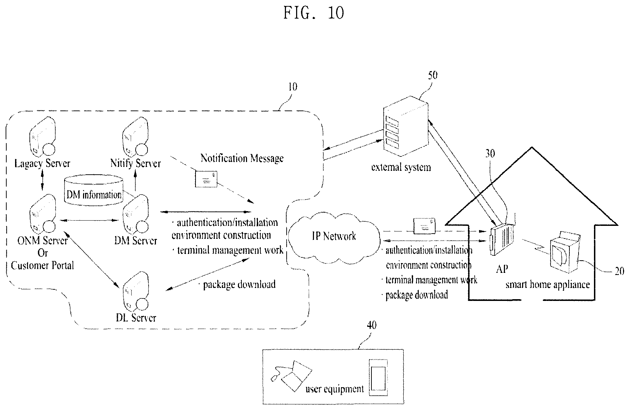

FIG. 10 illustrates a basic structure of an online system that may collect big data to recommend a course and option through deep learning, and illustrates a schematic view that a laundry treating apparatus in each home is managed by being connected to a server by communication.

As described above, to provide a customized course and option to the laundry treating apparatus through deep learning, a server 10 for managing all of the laundry treating apparatuses which are targets for service will be required. The server 10 may be constructed by a manufacturer or seller of the laundry treating apparatus.

The laundry treating apparatuses 20 for the service may be connected to the server 10 by communication and give and take information to and from the server 10.

Also, the user may control the laundry treating apparatus 20 by accessing the server 10 through a separate means such as an external terminal or a user equipment 40. In this case, the external terminal or the user equipment 40 means a device, such as a cellular phone, a smart phone, a notebook computer, and a computer, which is provided separately from the laundry treating apparatus or the server, and means a device having communication modules to enable communication with the outside.

Also, the external terminal 40 may be used to transfer state information of the laundry treating apparatus 20 to the user or transfer various kinds of information provided by the server 10.

The user may receive a remote service by purchasing the laundry treating apparatus 20 capable of receiving a remote service from the server 10. This laundry treating apparatus may be product that includes a communication module for performing communication with the server 10 and a client side protocol for performing a command transmitted from the server.

Meanwhile, for the existing product that cannot receive a service of the server, a separate device, which includes a communication module and a client side protocol as above, may be used. The user may receive a service by purchasing the separate device and connecting the separate device to the existing product.

The laundry treating apparatus 20, which desires to receive a remote service of the server 10, may be registered in the server 10 through its unique device ID and then managed by the server 10.

If the laundry treating apparatus 20 accesses the server 10, the server 10 may specify the laundry treating apparatus 20 through the device ID. Property information (for example, product type, model information, etc.) of the corresponding laundry treating apparatus may be registered in the server 10 together with the device ID.

In this case, although the device ID may be generated regardless of property information of the product, such as product type and model information, the property information may be coded together with the device ID. The device ID may be generated to allow the server 10 to recognize type or model information of the corresponding product.

The user may request various services including deep learning through the laundry treating apparatus 20 registered in the server 10. For example, if the user inputs a desired service through a display window (display unit) of the laundry treating apparatus 20, the laundry treating apparatus 20 may request the server 10 of the corresponding service.

As a result, the laundry treating apparatus 20 does not need to collect complicated big data, and does not need to process the big data. Since the laundry treating apparatus has only to receive a service or program provided by the server 10 by accessing the server 10, which performs deep learning by collecting big data, the microcomputer of the laundry treating apparatus 20, which has the existing option, may be used continuously.

Meanwhile, in most cases, the laundry treating apparatus 20 is not located near the user. For example, the laundry treating apparatus 20 may be at home, and the user may be at company.

Therefore, it may not be easy to request the server 10 of the corresponding service through the laundry treating apparatus 20. The laundry treating apparatus 20 may not provide devices for inputting or displaying various kinds of information in most cases. Therefore, service including the deep learning may be requested to the server through the external terminal 40, such as a smart phone, which is always carried with the user.

An application program that may implement the above service may be installed in the external terminal 40. Since the external terminal 40 is provided with devices for inputting or displaying various kinds of information, the external terminal 40 may request the service very conveniently.

Also, the user may perform remote management, remote control, monitoring, diagnosis for the laundry treating apparatus 20 through the application program. These functions may be examples of the aforementioned remote service.

In this case, the external terminal 40 directly performs communication with the server 10, and the server 10 performs communication with the laundry treating apparatus 20. Therefore, the user may request the remote service through the external terminal 40 and easily identify information on service which is performed and completed.

In this case, it is preferable that the external terminal 40 is directly not connected with the laundry treating apparatus 20 by communication. This is because that separate hardware and software for direct communication with the external terminal will be required for the laundry treating apparatus. Also, a communication environment of the external terminal 40 may not be more stable than that of the laundry treating apparatus. This is because that the external terminal 40 may easily move.

On the other hand, since it is general that the laundry treating apparatus 20 is fixedly installed inside a building, the laundry treating apparatus 20 may stably perform communication with the server 10 through an AP inside the building. Therefore, it is preferable that the external terminal 40 indirectly performs communication with the laundry treating apparatus 20 through the server 10. As a result, increase of the cost of the laundry treating apparatus 20 may be reduced, and remote control service and deep learning service may be provided stably and continuously.

To request and perform such a service, it is required to specify the relation among the external terminal 40 of the user, the laundry treating apparatus 20 which desires to receive the service. In the case that the user accesses the server 10 through the laundry treating apparatus 20, a service target may be specified in the server by accessing the server 10 through ID of the laundry treating apparatus 10. However, in the case that the user accesses the server 10 without through the laundry treating apparatus 20, a method for specifying the laundry treating apparatus for service target may be required.

Hereinafter, one embodiment that the relation among the server 10, the laundry treating apparatus 20 and the external terminal 30 are specified and give and take information will be described.

The user may input unique device ID of the laundry treating apparatus 20 for service by accessing a user site provided by the server 10 and then request service. The user may be subscribed to the user site and then given user ID and password. The user may log in the user site and register his/her all laundry treating apparatuses 20. The laundry treating apparatuses 20 registered in the user site may be registered in the server 10 together with corresponding user ID. This registration may be performed in such a manner that the user site automatically transmits user ID and device IDs of the laundry treating apparatuses matched with the user ID to the server.

Through these procedures, the server 10 may store user information related to the user and laundry treating apparatus information related to the laundry treating apparatus. The user information and the laundry treating apparatus information may be stored in the server by being matched with each other.

Meanwhile, the user may be subscribed to the user site as a member through the application program installed in the external terminal 40 and then given user ID and password. In this case, the user may register his/her all laundry treating apparatuses. The application program may be provided for a remote service of a specific laundry treating apparatus, or may be provided for a remote service of a plurality of laundry treating apparatuses.

Also, as described above, the user may register user information, which includes user ID and password, in the server 10 by accessing the user site.

Also, the user may directly register the laundry treating apparatus 20 in the server through the user information. That is, the laundry treating apparatus 20 may be registered in the server 10 through the user information. The laundry treating apparatus 20 may have a server address and a user site address, and may transmit the user information and its information to the server 10, whereby communication between the laundry treating apparatus 20 and the server 10 may start. At this time, the server 10 matches the laundry treating apparatus 20 with the user.

As a result, the server 10 may identify information indicating that a specific user has a specific laundry treating apparatus 20 and a place where the specific product is installed.

In any case, if ID is issued for the user, this ID may be registered in the server 10 together with laundry treating apparatus information of the user, that is, unique information of the product the same as that of device ID and then managed. Since this user information and the laundry treating apparatus information are matched with each other, any one of the user information and the laundry treating apparatus information may be specified by the other one.

The service received from the user through the server 10, the external terminal 40, or the laundry treating apparatus 20 may be performed by a command of an operator, which is for a corresponding management service. Alternatively, the user site, the external terminal or the laundry treating apparatus 20 may directly request the server 10 of management by directly performing communication with the server 10 through open API of the server 10.

The server 10 is provided with a server side protocol for management service, and the server side protocol performs the requested remote service by interworking with a client side management protocol of the product.

As a protocol for performing a management service as described above between the server 10 and the laundry treating apparatus 20, an open mobile alliance device management (OMA DM) protocol may be used. Therefore, if the OMA DM protocol is used, the server may be a DM server, and the laundry treating apparatus may be a DM client. Instead of OMA DM, another solution may be used. In this embodiment, the OMA DM protocol is used but the present invention is not limited to this protocol.

Meanwhile, the server 10 may include the following managements to provide a service while performing communication with the laundry treating apparatus 20.

Bootstrap: DM client needs authentication information with the DM server and network configuration information for network connection to initially perform management session. A procedure for this is referred to as bootstrap.

Provisioning: a laundry treating apparatus for initially performing management session is registered in the DM server through bootstrap, and a configuration of the laundry treating apparatus is updated to provide a service to the laundry treating apparatus. A procedure for this is referred to as provisioning.

Configuration Management: management for checking and changing configuration information related to the laundry treating apparatus or configuring, checking, or changing service related information is referred to as device configuration management.

Control Management: this means control management for controlling the laundry treating apparatus.

User Alert: the DM server may notify the user of a management task or receive a grant from the user through a screen of the laundry treating apparatus by transmitting an alert signal to the DM client. That is, the DM server may perform the management task through interaction with the user.

Diagnostic and Monitoring: throughput deterioration or failure may occur while the user is using the laundry treating apparatus. This state should previously be recognized, and a stable product use environment should be provided to the user through action suitable for the recognized state. This task is referred to as diagnostic and monitoring management.

Firmware Update Management: after the manufacturer sells the laundry treating apparatus, if a problem occurs in the laundry treating apparatus or there is a modification in view of function, firmware is updated. Firmware update management is for firmware update.

Software Component Management: management task for installing, updating and deleting a software component in the laundry treating apparatus is referred to as software component management.

Backup and Restore Management: this management is to backup and restore data of the laundry treating apparatus in the DM server.

Meanwhile, the server 10 may be installed by being distributed in several places. For example, server 1 may be installed in Korea and server 2 may be installed in USA.

Meanwhile, the server 10 may be categorized into a plurality of servers in accordance with roles. In FIG. 1, the server 10 is categorized into a DM server, a notification server, DL server, an ONM server, and a legacy server. In this way, if the server is categorized in accordance with roles, the DM server may prepare or perform another service when performing a specific service. Therefore, a plurality of services may be processed at the same time. The servers may perform their roles by directly accessing corresponding targets.

Some servers may be provided to directly access the laundry treating apparatus for service. For example, the notification server may directly transmit notification to the target laundry treating apparatus, and the DL server may directly transmit upgraded firmware to the target laundry treating apparatus.

The server 10 may be configured differently depending on management service. For example, if firmware update is only intended for service, since the service may be provided by the DM server, the notification server and the DL server, the other servers may not be required. Also, if the service is performed without notification of firmware update to the user, the notification server may not be required.

The server 10 of the present invention may not be limited to the server shown in FIG. 10.

Hereinafter, each configuration of the online system and a communication environment will be described in more detail. The following configuration may not be required necessarily. Also, additional configuration may be provided by description of the other portion of this specification.

### (1) The server may be configured as follows.

The role of the DM server is to provide a management command to the DM client. That is, the server provides a management function of remotely processing firmware update (modem firmware/OS) management task, software management task, diagnostic management task, etc. through the management command. The DM server may include a session management area, a security management area, a DM protocol process area, and a SyncML protocol engine area.

The DL server transmits a file to the DL client. That is, the DL server transfers information of a file to be transmitted through a download descriptor (DD) and provides a function of exactly downloading the file through the DL client. In this case, the DL client means a laundry treating apparatus which downloads a file. The downloaded file includes a firmware update package and a software management package. The DL server may include a session management area, a package management area, and a download area.

### 3) The ONM server or user portal

The ONM server serves to interface the DM or DL server and the legacy server, and business logic is implemented. The operator may give a management command through a management web page of the ONM server or check management information.

The user portal provides some function of the ONM to a general user. At this time, the user portal is implemented through open API of the DM server. The user may request the DM server of a management service through the user portal.

As main legacy servers with which the ONM server interworks, there are a server which receives terminal information and a server which receives user information. That is, user information or information of the laundry treating apparatus is transferred to the ONM server, whereby information for implementing business logic is provided.

### 5) Notification server

The notification server transmits a notification message of the DM server to the laundry treating apparatus. The notification server may include a session generation area and a schedule management area.

If the laundry treating apparatus exists in a private network, a connection manager specially configured in the server may be required to maintain connection with the laundry treating apparatus. The laundry treating apparatus may automatically request TCP connection after booting, and the connection manager maintains the requested TCP connection. The DM server transfers a notification message through the connection manager.

### 6) Open API

Applications of a mobile terminal such as smartphone may remotely manage laundry treating apparatuses through open API provided by the DM server. The open API will now be described in detail.

(2) The following components may be included in the laundry treating apparatus.

### 1) Communication module

The communication module is installed in the laundry treating apparatus. The communication module is not limited to its type. The communication module may be a wire communication module or a wireless communication module.

For example, the communication module may be a Wi-Fi communication module, PLC communication module, or Zigbee communication module.

A main role of the DM client is to perform a management command of the DM server. That is, the DM client provides a management function of remotely processing firmware update management, software management, diagnostic management and control management through the management command of the DM server.

In case of a laundry treating apparatus provided with a TFT display, the DM client may be built in a circuit board (display board) of the TFT. Although the DM client may be built in the controller of the laundry treating apparatus, since many display windows may be used to request a management service, it is preferable that the DM client is built in the control panel.

A main role of the DL client is to download a package file (firmware update package, software management package, etc.) from the DL server. The DL client accesses a download server by receiving download server URL from the DM client and takes a DD (download descriptor) to execute downloading.

The update agent serves to perform a management service command requested by the laundry treating apparatus in accordance with the management service. For example, the update agent serves to generate new firmware by using an update package downloaded for firmware update. The update agent may be implemented variously by a manufacturer.

Daemon may serve to process that the laundry treating apparatus periodically accesses the server. It is preferable that the demon is always maintained at on-state as far as a power cord is not eliminated from the laundry treating apparatus. For example, if a power cord of a washing machine is connected to a socket even though the power of the washing machine is off-state, the daemon may always be maintained at on-state. If it is required to maintain the power of the washing machine at on-state in accordance with a request of the server, the daemon may transmit a command to a main board to maintain power-on state.

A grant of the user may be required to perform a management service. Also, the user may request the laundry treating apparatus of the management service. As a user interface, a TFT LCD window of the laundry treating apparatus may be used. Particularly, the user interface may be provided through touch LCD or LED display. A display screen may be provided such that a screen for the management service may be popped up. The management service screen may be provided to input user ID and password. In this case, the user ID and password may be given when the user subscribes the user site as a member. A server system may identify the user through the ID and password. When a terminal requests a service, the terminal may transmit user ID and password, device ID and service request information to the server system.

However, the aforementioned user interface is not provided in all laundry treating apparatuses. This is because that high cost and space may be required if an additional interface for management service is implemented in addition to the user interface for performing the original function of the laundry treating apparatus.

For example, an input means of text or a display unit for displaying much information may not be preferable for the laundry treating apparatus.

Therefore, to perform a management service of the laundry treating apparatus, an external terminal such as smart phone may be required. This is because that the external terminal such as smart phone includes a communication module, a memory, an OS, an input means, and a display unit. Recently, an external terminal having LCD or LED has been developed. Therefore, a limitation of the user interface of the laundry treating apparatus may be complemented or enlarged through the external terminal. A detailed example will be described later.

(3) Hereinafter, a communication environment of the laundry treating apparatus and the server will be described.

Basically, the communication environment has no relation with its type if the communication environment is suitable to perform the management service.

FIG. 10 illustrates that a wireless internet communication module is applied to the laundry treating apparatus 20 and performs communication with the server 10 through AP (access point) 30 and Internet network.

Considering a communication path from the laundry treating apparatus 20 as a starting point to the server 10, the communication path after the AP corresponds to a common internet network, and the communication path before the AP corresponds to a private Internet network. The laundry treating apparatus 20 is given a private IP from the AP 30, and the AP 30 has unique IP.

The server 10 has IP, and the IP of the server may be unique IP. Therefore, it is preferable that the communication module of the laundry treating apparatus, for example, the Wi-Fi module has unique IP of the server. The laundry treating apparatus may access the IP of the server through an activity procedure, whereby communication between them may be performed.

Afterwards, the DM client may continue to transmit a signal to the DM server such that the server 10 may discover the position of the laundry treating apparatus 20. The AP 30 transmits, to the DM server, its unique IP information and information of a port to which the corresponding laundry treating apparatus is connected, whereby the DM server identifies the position of the DM client. The laundry treating apparatus may transmit, to the server 10, the information of the AP 30 and port information connected to the AP 30 through the AP. Therefore, if the laundry treating apparatus 20 transmits device ID information to the server, the server system may identify a position of a corresponding laundry treating apparatus and may access the laundry treating apparatus by using the identified information. At this time, user ID and password may be transmitted together with device ID information.

Therefore, the server 10 may identify a position of a specific laundry treating apparatus 20 of a specific user. When a specific service is requested to the server through the laundry treating apparatus or the external terminal of the user, the server may easily determine the specific laundry treating apparatus and perform the specific service.

Meanwhile, the online system of the present invention may further include an external system 50. The external system 50 may be a system that provides area information required for washing of laundry. The server 10, the laundry treating apparatus 20, and the external terminal 40 may be specified to mutually give and take information but cannot receive the area information. The area information may include weather information as to rainy weather of an area where the specific user is located, including rainfall probability, atmospheric information providing a temperature, humidity and an atmospheric pollution state of the area, earthquake information providing whether earthquake has occurred in the area, and water quality information providing water quality of the area.

The weather information may be related to a drying level of laundry, and the atmospheric information may be related to a pollution level of the laundry, the earthquake information may be related to vibration of the laundry treating apparatus, and the water quality information may be related to a necessary concentration of a detergent supplied to the laundry treating apparatus.

The area information provided by the external system 50 may be transferred to the server 10 or the AP 30 and used for a deep learning service which will be described later.

Also, the area information may include information on electric charges per time zone of the above area. The information on electric charges is related to a driving time zone of the laundry treating apparatus.

The external system 50 may correspond to a weather center or power plant of the area where the laundry treating apparatus is located.

The external system 50 may transfer area information to the server 10 or the AP 30 and the external terminal 40 through Internet network.

Meanwhile, the laundry treating apparatus 20 should include a separate communication device, in addition to a tub and a drum, to give and take information to and from the external terminal 40, the server 10, the external system 40 and the AP 30.

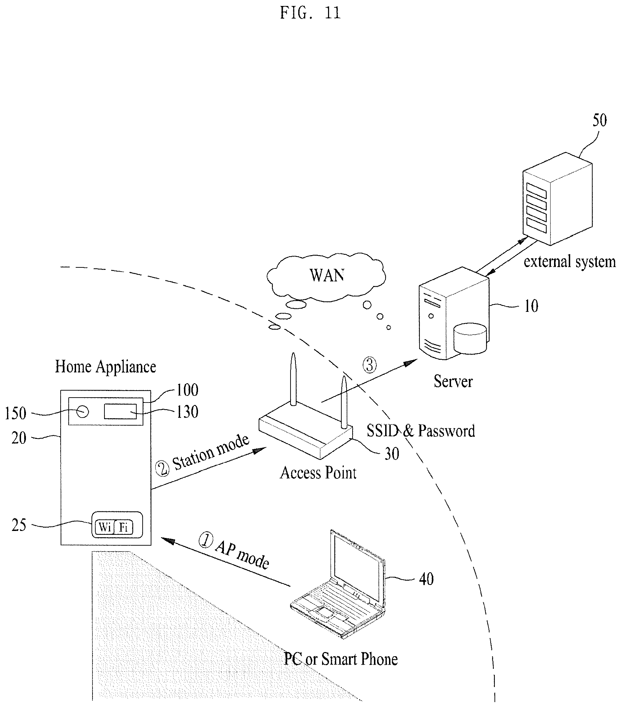

Hereinafter, a method for communication connection of a laundry treating apparatus and a configuration therefor will be described with reference to FIG. 11.

The laundry treating apparatus 20 should finally perform communication with the server 10. To this end, the communication module should be built in or connected to the laundry treating apparatus 20. In detail, the communication module 60 may be the Wi-Fi communication module 60.

First of all, a power source is applied to the laundry treating apparatus 20 through the power selection unit 140 provided in the control panel 100 of the laundry treating apparatus 20. At this time, the power source is also applied to the Wi-Fi communication module 60.

As shown in FIG. 11, the control panel 100 may include the state display unit 130. Meanwhile, the state display unit 130 may be a touch display. The touch display may display all states of the laundry treating apparatus, and may select most of operations or conditions by touching the display.

The user may easily connect the laundry treating apparatus with the server by communication due to such functionality of the touch display.

For communication connection of the laundry treating apparatus, the Wi-Fi communication module 60 may be provided to support a setup mode for communication connection and a use mode capable of performing communication. That is, the Wi-Fi communication module 60 should perform the setup mode for communication connection, and the setup mode is switched to the use mode if communication is connected in the setup mode. Therefore, for communication connection, the setup mode of the Wi-Fi communication module 60 is first operated.

In this case, the setup mode is a mode capable of performing communication with the AP. Therefore, the setup mode may be referred to as AP mode. Also, the use mode is a state that the laundry treating apparatus may perform communication with the server through the AP, and is the state that information may be transmitted and received to perform a remote management service at any time. That is, the use mode may be a standby state for performing a remote service. Therefore, the use mode may be referred to as a connection mode or standby mode.

For operation of the setup mode, the input means may be provided in the Wi-Fi communication module 25. However, in most cases, the Wi-Fi communication module 25 may be built in the laundry treating apparatus 20 or provided simply and then mounted in the laundry treating apparatus 20. Therefore, the input means may be provided in the laundry treating apparatus 20 as an input unit 150.

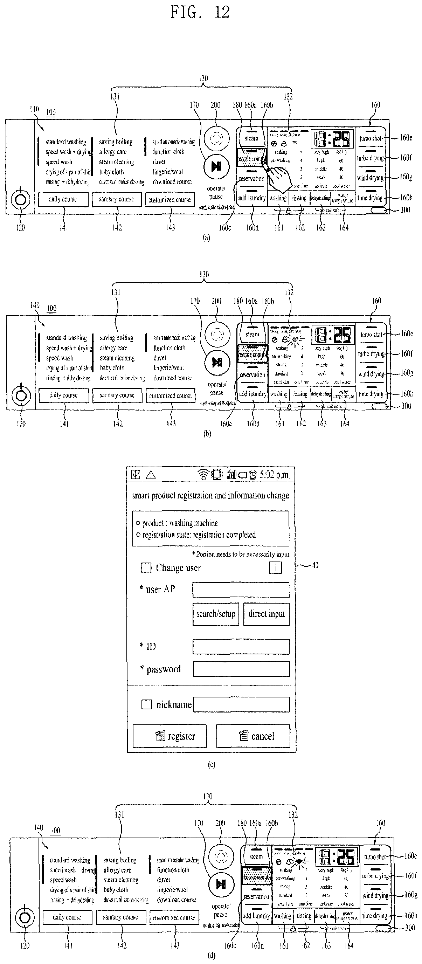

Referring to FIG. 12a, the control panel 100 may be provided with a remote control button 160b (see FIG. 12a). The remote control button 160b may be used less than the other input units. Therefore, it may be preferable that the setup mode may be operated through the remote control button 160b. For example, the remote control button 160b may be pushed three seconds or more, whereby the Wi-Fi communication mode may be operated in the setup mode.

However, a separate means for setup, for example, a means for displaying or inputting user information and connectable network information may not be provided in the laundry treating apparatus 20.

Therefore, it is preferable that the setup mode is connected through the external terminal 40. In this case, it is preferable that the external terminal 140 is a device that includes a Wi-Fi communication module, a text input means, a display means, a central processing unit (CPU), an operating system (OS), and a storage means. For example, the external terminal 40 may be any one of a device, which includes a screen and a communication equipment, such as a notebook computer, a smart phone and a tablet PC.

The external terminal 40 may be provided to connect the Wi-Fi communication module with the AP 30 on behalf of the Wi-Fi communication module 25 or the laundry treating apparatus.

Referring to FIG. 12b, if the setup mode is performed, the display unit 130 may display a phrase such as "connect to wifi-setup mode using smart phone" and a wifi icon 132a may be lighted.

Referring to FIG. 12c, in the setup mode, SSID (service set identifier) (wireless LAN name) of the access point (AP) 30 and user information for registration of the laundry treating apparatus are input through the external terminal 40. SSIDs that may be connected are displayed in the external terminal 40, and the user selects SSID which will be connected continuously, for example, SSID used at home. In this case, security is set to the wireless LAN, the external terminal should select SSID and input a password of SSID. Therefore, the SSID information may include a password of the SSID.

If the user information and information of the SSID are input completely, WiFi setup may be completed such that the communication module 60 is connected with the AP 30 by communication.

Referring to FIG. 12d, the setup mode such as "wifi setup is completed" may be displayed on the display unit 130. At this time, the Wi-Fi communication module 25 is switched to the use mode.

In this case, when the SSID information and the user information are input, it is preferable that these kinds of information is automatically stored in the communication module 60. Therefore, communication may be performed continuously without operation of a separate setup mode. That is, through this information, the communication module 60 is automatically connected to the AP in the use mode. The laundry treating apparatus 20 is able to perform wireless LAN communication with the specific AP 30. That is, short-range communication may be performed.

Meanwhile, the communication module 60 may have an address of the server 10 to which the communication module 60 desires to be connected, or a user site address. In this case, it is preferable that the address of the server or the user site address is a fixed IP. Therefore, in the use mode, the laundry treating apparatus 20 may perform communication with the server 10 through the AP 30. Therefore, the laundry treating apparatus 20 automatically registers user information and product information previously stored therein with the server 10 through the AP during switching to the use mode. The user site may be used to authenticate user information and laundry treating apparatus information transferred from the laundry treating apparatus.

In this case, the user information may be the information previously stored in the server 10 through the aforementioned user site. Therefore, the server 10 compares the user information previously stored through the user site and product information with the information received during switching to the use mode and stored the compared result. As a result, the server 10 recognizes a specific user and a specific laundry treating apparatus of the specific user. Particularly, the server 10 may recognize the position of the specific laundry treating apparatus.

Meanwhile, the Wi-Fi communication module 60 has a fixed address for operation of the setup mode. The external terminal 40 such as smartphone or notebook computer may be connected in the setup mode by inputting the fixed address. That is, the external terminal 40 is connected to a web of a wi-fi modem setup mode of the laundry treating apparatus. The fixed address may be designated in the form of 192.1.xx.xx. Setup mode connection of the external terminal 40 means that the input means and the display means of the communication module 60 may be enlarged using the external terminal 40.

Therefore, the user may easily switch the communication module 25 from the setup mode to the use mode through the external terminal 40. This means that mode switching may be performed in the laundry treating apparatus 20 without addition or modification of hardware such as a separate input unit or display unit. Since the external terminal 40 which is separately provided is used, the cost of the laundry treating apparatus may be prevented from being increased.

Meanwhile, the server 10 may be connected with the external system 50 and the laundry treating apparatus 20 to enable communication, whereby information may be transmitted and received between the server 10 and the external 50 and the laundry treating apparatus 20.

The system may be provided such that the user may allow the laundry treating apparatus 20 to perform communication with the server 10 through the external terminal 40 only.

In other words, communication between the laundry treating apparatus 20 and the server 10 may be set through the external terminal 40 only. This is to prevent personal information such as a use history of the laundry treating apparatus 20 from being randomly transferred to the server 10.

The external terminal 40 may serve as a key such that the laundry treating apparatus 20 may receive information from the server 10.

For example, if the user does not enable communication connection of the laundry treating apparatus 20 to the external terminal 40, the user may not be allowed to receive a customized course and option even if the user desires to receive the customized course and option.

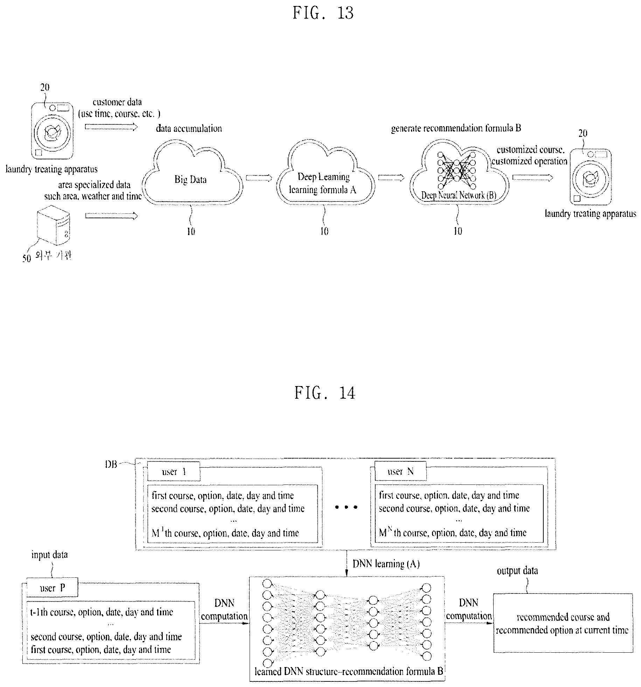

FIG. 13 illustrates that the online system performs deep learning.

The laundry treating apparatuses 20 shown in FIG. 13 are a plurality of laundry treating apparatuses 20 provided by a seller or manufacturer. That is, data including end details of a course used by each user of the plurality of laundry treating apparatuses provided by the seller or manufacturer or option details of the course may be collected by the server 10.

Referring to FIG. 13, the use history including the course or option of the clothes processing apparatus 20 and the use time, and the area-specific data provided by the external organization 50 are collected in the server 10 as big data.

Thereafter, the server 10 forms a prediction formula B capable of predicting the pattern in the big data using the learning formula A.

The prediction formula B may be stored in the clothes processing apparatus 20 or in the server 10 as it is. It is possible to recommend one or more of the customized courses or options to the specific clothes processing apparatus 20 using the prediction formula B.

FIG. 14 specifically shows generation of the use prediction formula B through the learning equation A based on the use history.

The server 10 may also collect data including corresponding area information when each user provided by the external system 50 uses his/her laundry treating apparatus 20.

The server 10 may collect and accumulate data provided by the external system 50 and the laundry treating apparatuses 20 provided by the seller or manufacturer, thereby forming big data.

The server 10 may be provided to perform deep learning.

The server 10 may analyze a pattern of the data by performing deep learning through a learning formula A using the big data. The learning formula A may be an algorithm that analyzes and sorts big data through deep learning. The learning formula A may be an algorithm that acquires a pattern of a use history of a course and option performed at a specific area, a specific time, a specific day, and a specific atmospheric state from the big data.

As a result, the learning formula A may be an algorithm that discovers and predicts a pattern of a use history of a course and option in accordance with various references such as a specific area, a specific time, a specific day, a specific weather, specific population, a specific family member, specific laundry, specific amount of laundry, a specific water supply speed, and a specific motor driving speed by deep learning of big data coexisting without any reference.

Also, the learning formula A may be an algorithm that produces a use prediction formula B that may predict a course and option to be performed if a use history is finally input at least once more.

At this time, the use prediction formula B is generated by the server 10 through a deep neural network (DNN) A which is a learning formula. The use prediction formula B may be an algorithm or computing formula that deducts a predicted resultant value if a specific state is input by analysis of big data.

That is, the use prediction formula B may be an algorithm acquired from a server, which manages a plurality of laundry treating apparatuses including the laundry treating apparatus, by deep learning based on one or more of a use history of the specific user and a random user and area information where the laundry treating apparatus is located.

Also, the use prediction formula B may mean an algorithm or computing formula that may recommend a course and option to be used by a specific user at a corresponding condition through a course and option used by a random user at a specific condition.

At this time, the recommendation may include that the user is recommended what to do and that convenience is provided to the user by predicting the user's action.

That is, since predicting the user's action includes predicting a pattern based on a past use history, the result of deep learning through the learning formula A may be referred to as the use prediction formula B.

Meanwhile, that the user is recommended what to do is based on area information of the use history of the random user, and thus the result acquired from the learning formula A may be referred to as a recommendation formula B.

Therefore, the recommendation formula B and the use prediction formula B may be changed in their titles depending on their purpose of uses but their key points may be the same as each other.

The learning formula A may generate the use prediction formula B through deep learning of big data and then continue to substitute data, which are input later, for the use prediction formula B, thereby learning (updating or developing) the use prediction formula B.

Also, the learning formula A may again substitute data collected by the laundry treating apparatus 20 and the external system 50 for the learning formula A to generate the use prediction formula B, whereby the use prediction formula B may be developed through deep learning.

As a result, the learning formula A may develop the use prediction formula B more accurately with high completeness. The server 10 may transfer the recommendation formula or the use prediction formula B to the laundry treating apparatus 20, whereby the use prediction formula B may previously be input to the controller of the laundry treating apparatus 20.

Also, when the manufacturer or seller provides the laundry treating apparatus 20, the use prediction formula B may previously be input to the laundry treating apparatus 20.

Also, the use prediction formula B is provided in the server 10, and the laundry treating apparatus 20 may access the server 10 through the communication module 60 whenever there is a request, thereby receiving the recommendation formula stored in the server 10, or may access the learning formula A and the use prediction formula B, thereby indirectly using the learning formula A and the use prediction formula B.

As a result, the laundry treating apparatus 20 may compute, predict, determine and recommend a course or option predicted to be used by a specific user who uses the laundry treating apparatus 20 by inputting information of the specific user to the use prediction formula B.

The predicted course or option may be recommended for the user through the display unit 130.

### Details will be described later.

FIG. 13 illustrates that the server 10 generates the use prediction formula B through the learning formula A, which may perform deep learning, and the specific user may receive customized information by using the use prediction formula B.

A course performed when a user 1 who uses the laundry treating apparatus 1 20 provided by the manufacturer or seller uses the laundry treating apparatus 1 20, an option, a used date, a used day, a used time zone, and a history of weather at the time when the laundry treating apparatus is used are stored in the server 10 as DATA.

If the user 1 has used the laundry treating apparatus 20 M times, the number of the DATA may be M.

Also, a course performed when a user 2 who uses the laundry treating apparatus 2 20 provided by the manufacturer or seller uses the laundry treating apparatus 2 20, an option, a used date, a used day, a used time zone, and a history of weather at the time when the laundry treating apparatus is used are stored in the server 10 as DATA. If the user 2 has used the laundry treating apparatus 20 M times, the number of the DATA may be M.

Also, a course performed when a user N who uses the laundry treating apparatus N 20 provided by the manufacturer or seller uses the laundry treating apparatus N 20, an option, a used date, a used day, a used time zone, and a history of weather at the time when the laundry treating apparatus is used are stored in the server 10 as DATA. If the user N has used the laundry treating apparatus 20 M times, the number of the DATA may be M.

Therefore, M data used by N users are collected in the server 10, whereby a total of N x M huge DATA may be collected.

If the number of the laundry treating apparatuses 20 is great or the number of times of the laundry treating apparatus 20 used is great, the DATA may be more huge data.

The server 10 may analyze a pattern and rule from the DATA by deep learning of the DATA through the learning formula A.

As a result, the server 10 may generate, from the DATA, the use prediction formula B for predicting a course and an option of the course of the washing machine, which may be predicted to be used or may be used by a specific user P at the current time, on the basis of the area information and time zone by analyzing a type of course performed by a plurality of users and a use pattern of an option of the course, if deep learning is performed for a sufficient time.

In other words, the server 10 may collect data including a type of a course used in the laundry treating apparatus by a plurality of users and an option detail of the course, and may generate the use prediction formula B that may predict a course which will be used later and an option of the course by analyzing a type of the course and a use pattern of an option of the course from the data through deep learning.

The laundry treating apparatus 20 may include a communication module 60, which may perform communication with the AP 30, and may be provided to perform communication with the server 10. Also, the laundry treating apparatus 20 may compute and recommend a course predicted to be used by a new user and an option of the course by using the use prediction formula B provided by the server 10.

The new user is identified from a plurality of users who have provided big DATA when the use prediction formula B is first generated, and may correspond to the aforementioned specific user P.

The use prediction formula B may output a course intended by the specific user, predicted to be used by the specific user or suitable for the specific user and option result at the current time zone if any one or more of a course of the specific user, option, date, day, time, and area information are input.

The pattern prediction structure may be comprised of a weight matrix and a bias vector.

Also, if the specific user P uses the t-1th laundry treating apparatus, a history of the specific user P may be input to the pattern prediction structure and then learned.

Therefore, if the specific user P uses the 't'th laundry treating apparatus, the laundry treating apparatus 20 may compute and recommend a course or option predicted to be used by the specific user P at the current time through the pattern prediction structure.

In other words, the laundry treating apparatus 20 of the present invention and the server 10 may collect use history data of course and option of a random user, a current weather of the random user, a recent weather history, weekly weather information, weather forecast and atmospheric information, and area specific information.

Afterwards, the server 10 may learn a course use pattern of the random user and main use option based on the course through the learning formula A, and may configure the use prediction formula B which is a deep learning algorithm for customer use prediction that may correspond to a pattern which is continuously variable.

Afterwards, the laundry treating apparatus 20 and the server 10 may recommend and again learn a customized course and option by using a recent DATA history of a specific user in accordance with the use prediction formula B and then use the recommended and learned course and option for next prediction.

The customized course is a course suitable for use frequency of the course, day, time zone, use order and use pattern, and the customized option is an optimal washing option in accordance with the area information together with the option derived from the customized course.

For example, the customized option may be an option controlled in accordance with dehydrating speed change according to current humidity and weather, recent fine dust index, increase of strength and number of times of washing and rinsing according to yellow dust, steam supply and future weather forecast.

Therefore, according to the present invention, an optimal course and option customized for each user may be recommended to increase convenience of a user.

Also, according to the present invention, when the optimal course and option are recommended, the option may be controlled based on area information, whereby specialty of the user may be considered. For example, the optimal option may be provided by interworking with an area weather of a specific user, an option for improving health and sanitary by interworking with atmospheric information such as atmospheric pollution and dust state may be provided, or an option for indicating a washing schedule considering weather forecast or deriving optimal washing efficiency by adding dehydrating and rinsing if necessary may be provided. Meanwhile, the learning formula A and the recommendation formula B may be stored in the server 10.

The laundry treating apparatus 20 may be recommended a customized course and option from the server 10 in contact with the learning formula A and the recommendation formula B whenever the recommendation request unit 180 is input through the communication module 60.

Also, the server 10 may be connected with the external system 50 and the external terminal 40 by communication to easily transmit and receive information to and from them. Therefore, the server 10 may predict a suitable course and option by inputting information acquired from the external system 50 and the external terminal 40 to the learning formula A or the recommendation formula B.

As a result, the laundry treating apparatus 20 needs to compute the customized course and option through the recommendation formula B, and may recommend the customized course and option by using only throughput of the existing controller because the laundry treating apparatus 20 has only to transmit a use history to the server 10.

However, if the laundry treating apparatus 20 is blocked from communication connection of the server 10 and the external terminal 40, the customized course and option cannot be recommended. Also, the time when the laundry treating apparatus 20 is connected with the server 10 and the external terminal 40 to transmit and receive data to and from them may be required, whereby the course and option may not be recommended for a long time even though the user inputs the recommendation request unit 180.

Also, if the server 10 completely acquires the recommendation formula B by performing the learning formula A, overload of the server 10 may occur if the use history is collected from each laundry treating apparatus 20.

Therefore, the laundry treating apparatus 20 should be provided to recommend the customized course and option.

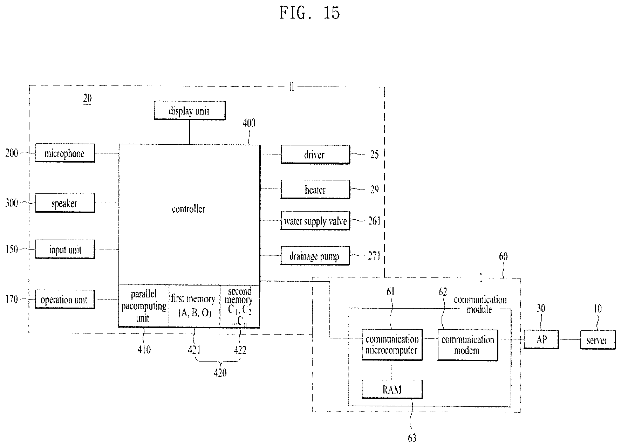

FIG. 15 is a block diagram illustrating a configuration of a laundry treating apparatus that may recommend a least one of a course and option customized for a user through a learning formula A and a recommendation formula B.

The controller 400 of the laundry treating apparatus according to the present invention may be provided in the control panel 100, or may be provided in the cabinet 21 separately. The controller 400 may be provided to control all configurations of the laundry treating apparatus according to the present invention as shown.

The controller 400 may be controlled to control the recommendation request unit 180, the display unit 130, the input unit 150, the operation unit 170, the microphone 200, the speaker 300, the communication module 25, the driver 26, the water supply valve 261, the drainage pump 271 and the heater 29.

Meanwhile, the controller 400 may further include a storage unit 420 in which the learning formula A, the recommendation formula B and an operating system OS 0 for controlling the laundry treating apparatus are separately stored, and a computing unit 410 that may compute and determine a course and option which will be recommended through the learning formula A and the recommendation formula B, which are stored in the storage unit 420.

That is, the storage unit 420 may previously store at least any one or more of the learning formula A and the recommendation formula B, which are generated during manufacture or generated by the server 10 when initially accessing the server 10. The learning formula A may only be stored in the storage unit 420, whereby the recommendation formula B may be acquired through the computing unit 410. Also, the recommendation formula B may only be stored in the storage unit 420, whereby the computing unit 410 may determine the customized course and option through computation. As a result, the laundry treating apparatus 20 may be provided to recommend a course and option immediately if the recommendation request unit 180 is input even without support of the server 10 and the external terminal 40.

The storage unit 420 may store the learning formula A, the recommendation formula B and the operating system OS 0, and is preferably provided as a nonvolatile memory that may maintain a storage state even though a power source is not supplied thereto. Also, the storage unit 420 is preferably provided as a bulk storage to store the learning formula A or the recommendation formula B and the operating system OS 0.

Therefore, the storage unit 420 may include a first memory 421 comprised as a nonvolatile memory of large capacity. The large capacity may be 1G to 1TB.

Meanwhile, the recommendation formula B may be provided to output a course and option which will be performed at the current time only if a use history C of N times should be input. In other words, the recommendation formula or the use prediction formula B is provided as an algorithm that may output a course and option which will be performed if a use history of the course and option which are performed is input.

At this time, the recommendation formula B does not need an input of the use history to analyze a pattern of the use history. The recommendation formula B is a use prediction formula obtained by extracting a huge use history of a random user through deep learning of the learning formula A. Therefore, the recommendation formula B may need an input of minimum use histories to sort or select a suitable course and option among a plurality of recommended candidate groups.

That is, the recommendation formula B may need an input of use histories of N times or N use histories to output one course and option having high accuracy. Therefore, since the recommendation formula B does not analyze the pattern of the use histories simply, the N times may corresponds to one time to 10 times.

Therefore, the storage unit 420 may be provided to store use histories C of N times or more therein.

Meanwhile, the use history C may be stored in the first memory 421 but its capacity may not be great because the use history corresponds to one time to 10 times.

The storage 420 may include a second memory 422 which is a nonvolatile memory of low capacity and is provided to store the number of use histories input to the recommendation formula B and remove a use history exceeding the number of use histories stored therein. The low capacity may be 1G byte or less.

The second memory 422 may be provided to delete use histories in the stored order if the use histories are stored N times or more. As a result, the second memory 422 may be provided in the form of EEFROM that enables reading or overwriting.

Meanwhile, use histories of N times may previously stored in the second memory 422. This is to recommend a course and option immediately through the recommendation formula B even without a use history of a user who has purchased the laundry treating apparatus 20.

That is, the second memory 422 may be provided to store an initial input value such that the recommendation formula B may output a course and option to be recommended when the recommendation request unit 180 is input.

The previously stored use history may be a course and option detail input randomly by a manufacturer or seller, or may be an actual use history of a random user in the server 10.

Therefore, the controller 400 may recommend a course and option through the recommendation formula B, and may also be provided to recommend a course and option even without a use history of a course and option performed by the laundry treating apparatus 20.

Meanwhile, the recommendation formula B stored in the storage unit 420 may be provided to output a suitable course and option by reflecting the area information and a scheduler if the area information provided by the server 10 and the scheduler of a specific user, which is provided by the external terminal 40, are input through the communication module 60.

The recommendation formula B may be provided to input area information and information such as scheduler as well as a use history of the course and option to be reflected in recommendation of the course and option.

For example, the area information may include any one or more of weather information as to rainy weather of an area where the laundry treating apparatus 20 is located, including rainfall probability, atmospheric information providing a temperature, humidity and an atmospheric pollution state of the area, earthquake information providing whether earthquake has occurred in the area, water quality information providing water quality of the area, and information on electric charges per time zone of the area.

The computing unit 410 may reflect the area information in the recommendation formula B.

Also, the computing unit 510 may be provided to control an option to be recommended after provisionally computing the course and option from the recommendation formula B. For example, the computing unit 410 may control and recommend at least any one of washing strength, rinsing times, dehydrating strength, device washing, operation time, water temperature, and steam supply.

In detail, the computing unit 410 may be provided to compute and output a customized course and option by inputting the use history stored in the storage unit 420 to the recommendation formula B, or again acquire the recommendation formula B by inputting the use history to the learning formula A or input and compute area information input by the communication module 60 to recommendation formula B.

If the computing unit 410 again acquires the recommendation formula B by deep learning using the learning formula A through the use history collected from the laundry treating apparatus 20, the recommendation formula B may be provided to recommend a course and option more specialized for the user who uses the laundry treating apparatus 20.

That is, the computing unit 410 may improve accuracy and suitability of the recommended course and option by updating the recommendation formula B through the learning formula A. Therefore, the laundry treating apparatus 20 may recommend the course and option customized for the user's habit and environment if the use history is increased or time passes.

The computing unit 410 may again acquire the recommendation formula B if the use history is collected at a certain level. For example, if the use history stored in the second memory 422 is fully exchanged, the computing unit 410 may again acquire the recommendation formula B.

Meanwhile, the first memory 422 may fully store the use history to again acquire the recommendation formula B. The computing unit 410 may need more complicated computing capability than the controller 400 for driving the driver and the water supply valve. The computing unit 410 may preferably be provided as a parallel computing unit that may simultaneously perform parallel processing of different tasks through a plurality of processes.

The computing unit 410 may be provided in a single body with the main controller 400. The computing unit 410 may be provided to be connected with the controller 400 to perform computation required for the controller 400 instead of the controller 400.

As a result, the controller 400 may compute and determine a course and option to be recommended among the plurality of courses and options. Therefore, even though the communication module 60 is disabled or communication connection of the server 10 or the external terminal 40 and the communication module 60 is blocked, the controller 400 may compute and determine the course and option to be recommended.

Meanwhile, the communication module 60 may transmit any one of the recommendation formula B and the learning formula A from the server 10 to the controller 400. The controller 400 may update any one of the learning formula A and the recommendation formula B stored in the storage unit 420 by exchanging any one of the learning formula A and the recommendation formula B.

Update through the server 10 and the communication module 60 may exchange the learning formula A and the recommendation formula B while maintaining the operating system.

Therefore, the laundry treating apparatus 20 may acquire the learning formula A and the recommendation formula B of a recent version through the communication module 60, and may solve a problem even though the problem such as bug occurs in the learning formula A and the recommendation formula B.

Meanwhile, the communication module 60 may include a communication modem 62, which may perform communication with the AP 30, a communication microcomputer 61 for controlling the communication modem 62, and a RAM 63 for storing information required for the communication microcomputer.

At this time, the power supply unit P may supply a power source to the controller 400 and the communication module 60 by supplying the power source to the laundry treating apparatus 20. If the operation of the laundry treating apparatus 20 ends, it is preferable that the power to the controller 400 is blocked to minimize consumption of a standby power.

However, it is preferable that the power source supplied to the communication module 60 is maintained. This is to prevent the communication module 60 from repeating the setup mode to connect with the AP 30 or the server 10 through communication and save the time when the communication module 60 is enabled or booted.

That is, the power source or power may always be supplied to the communication module 60 even though the course and option performed by the laundry treating apparatus 20 end.

Therefore, since the power is always supplied to the communication module 60, the RAM 62 may periodically receive information from the server 10. As a result, the RAM 60 may transfer the area information to the controller 400 immediately if the recommendation request unit 180 is input. Therefore, it is possible to save the time when the communication module 60 accesses the server 10 or the server 10 receives area information.

Meanwhile, the communication module 60 may always be connected to the server 10. If the power source is input and thus the power is supplied to the controller 400, the communication module 60 may be provided to immediately receive the area information from the server 10. As the power is supplied to the controller 400, at the time when the operating system is enabled, the area information may be stored in the storage unit 420 or may immediately be transmitted to the controller 400. As a result, the area information may be reflected in the recommendation formula B as soon as the recommendation request unit 180 is input.

FIGS. 16 to 19 illustrate that a customized course and option may be recommended for a user by using the deep learning and use prediction formula B.

Referring to FIG. 16a, a specific user P may be a working mom customer, and the user P may wash baby cloth after work on weekdays and select a standard course and an option for adding rinsing by collecting clothes of adults on weekend.

At this time, the system or the laundry treating apparatus may recommend an allergy care course for the user P from 18:00 to 20:00 on weekdays and suggest tub washing before one hour from allergy care.

That is, the use prediction formula B considers use patterns of the specific user P and a normal working mom customer. This is because that working moms have frequently used an allergy care course to protect health of a baby with a weak immune system and an option of tub washing for sanitary.

Also, the standard course and an option for rinsing addition may be recommended for the user P at 12:00 to 20:00 on weekend. This is because that the use prediction formula B has learned the normal use patterns of the specific user P and the working mom customer.

Referring to FIG. 16b, the specific user P mainly uses reservation functions of Monday and Thursday, and time for coming home is two hours late and allergy care is mainly reserved on Thursday. In this case, the system or the laundry treating apparatus may recommend or suggest that standard washing should be reserved at 20:00 on Thursday by recognizing the pattern.

The recommendation or suggestion may be pushed through an application program of the external terminal 40.

Additionally, it is assumed that the specific user P selects an allergy care course and option for rinsing addition of two times on Monday, selects a standard course and option for rinsing addition of four times on Tuesday, selects an allergy care course and option for rinsing addition of two times on Thursday, and selects a standard course and option for rinsing addition of four times on Saturday.

At this time, if the specific user P desires to use the laundry treating apparatus on Sunday, the laundry treating apparatus 20 may recommend an allergy care course and option for rinsing addition of two times through a pattern prediction structure.

That is, the pattern prediction structure (use prediction formula B) is an active determination structural formula, and may not be the most frequent value or average value. If the pattern prediction structure is the most frequent value, the allergy care course and the standard course have the same number and thus an output value cannot be obtained. Also, if the pattern prediction structure is the average value, rinsing addition will be three times, whereby the output value not intended by the user may be obtained.

As a result, the pattern prediction structure may be a structural formula or algorithm that may recommend a customized course and option for a specific user P by learning a pattern of the specific user P.

Therefore, the laundry treating apparatus 20 may learn a pattern or rule from a use history of the specific user P and predict a course and option of a laundry treating apparatus to be used by the specific user, thereby automatically recommending the customized course and option.

If the laundry treating apparatus 20, which recommends the customized course and option, recognizes atmospheric information indicating that concentration of a fine dust is high from the area information provided by the external system 50, the laundry treating apparatus 20 may control course and option information to be recommended by performing additional computation processing. For example, the laundry treating apparatus 20 may control any one or more of washing strength and rinsing times of the option to be a higher value.

The external system 50 may be provided to provide the server 10 or the laundry treating apparatus 20, and the external terminal 40 with area information, which includes any one or more of weather information of an area where the new user is located, earthquake information, water quality information, and electric charges per time zone (see FIG. 3).

The server 10, the laundry treating apparatus 20 or the external terminal 40 receives the area information from the external system 50 on the basis of the area where the new user is located. This is because that the area information is varied per area.

The area information may greatly affect recommendation of a course or option of the laundry treating apparatus as described above.

The area information may be input to the pattern prediction structure as DATA and used to output or recommend the customized course or option.

At this time, if a course and an option of the course to be recommended as an output value in the pattern prediction structure are completely computed, one or more of the course to be recommended and the option of the course may be controlled by reflecting the area information.

However, since it is general that the area information affects drying of laundry or strength, level, and frequency of each cycle, it is preferable that the area information is used to control the option.

Therefore, according to the present invention, when the customized course and option are provided, it is possible to control strength and number of times in washing, rinsing and dehydrating cycles, rotation speed of a drum, steam supply, a water temperature and a water level on the basis of the area information.

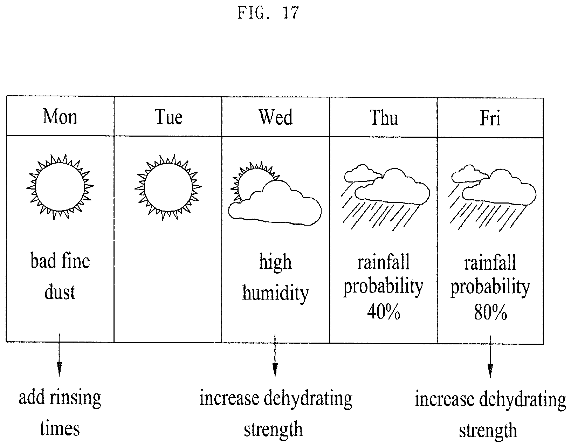

Referring to FIG. 17, if area information indicating that fine dust concentration of the area is bad (Monday) or is bad for a certain time period is transferred to the server 10 or the laundry treating apparatus 20 and then reflected in the pattern prediction structure, addition of rinsing times may be performed in the option to be recommended.

If the find dust concentration is not bad, the option to be recommended may not be controlled (Tuesday to Friday).

If the fine dust is very bad, the option to be recommended may be performed in such a manner that rinsing times and washing strength may be increased, and steam may be added to perform sterilization.

In other words, if atmospheric information of a bad atmospheric state is received, the option in the recommended course and option may be controlled in such a manner that dust and pollution material may be removed and sterilized.

Also, if the rainfall probability is high, the option to be recommended may be controlled in such a manner that dehydrating strength is increased to one stage or more to increase drying efficiency (Friday). A high reference of the rainfall probability may be 70%, and if the rainfall probability is lower than the high reference, the option to be recommended may not be controlled (Thursday).

Also, if current humidity is high, in the option to be recommended, dehydrating strength may be increased to one stage or more to increase drying efficiency (Wednesday). The high reference of the humidity may be 60%, and if humidity is lower than the high reference, the option to be recommended may not be controlled (Tuesday).

In other words, according to the present invention, in the process of recommending the customized course and option, the option related to dehydrating strength, dehydrating times and rotation speed of the drum may be controlled to maintain drying efficiency considering humidity at the atmospheric state.

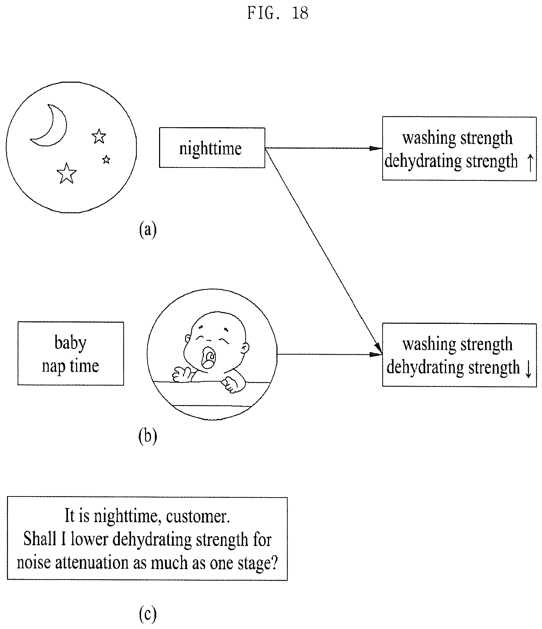

Referring to FIG. 18, the area information may be a time zone or electric charges per time zone.

If electric charges are cheap as the time zone corresponds to nighttime, washing strength and dehydrating strength may be recommended to be stronger, and may be recommended weaker to reduce noise because of nighttime (see FIG. 18a).

The washing strength and the dehydrating strength may correspond to change or non-change of rpm and rotation direction of the drum.

Also, the washing strength and the dehydrating strength may be recommended weaker even if the time zone correspond to a time zone when a baby takes a nap (see FIG. 18b).

Also, a push alarm for recommending weaker dehydrating strength due to nighttime may be transmitted to the external terminal 40 (see FIG. 18c).

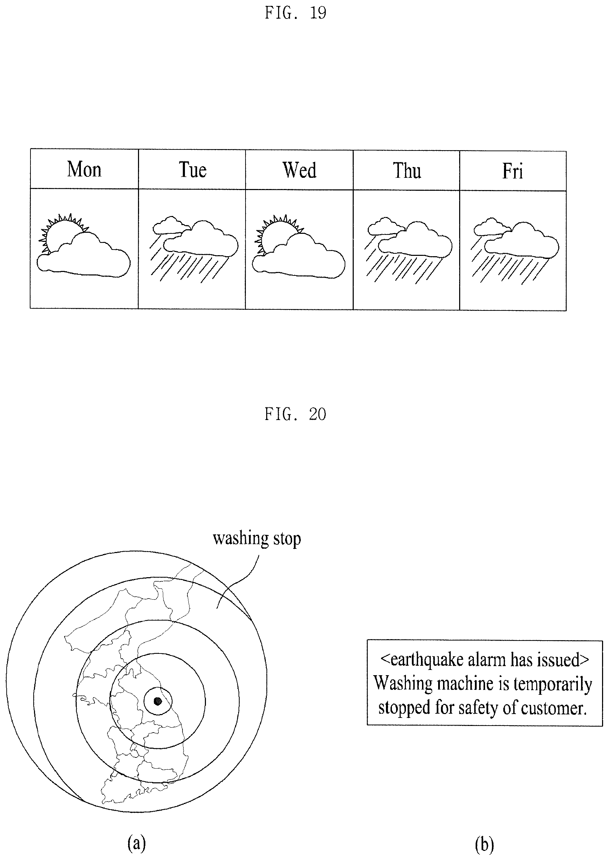

Referring to FIG. 19, if the area information is information arrived in the area at a rainy season, tub washing for sanitary may additionally be recommended for the user.

Also, if tub washing of one time is normally recommended after washing of 30 times, the option may be controlled in such a manner that tub washing of one time is recommended after washing of 20 times.

Referring to FIG. 20, since the area information is earthquake occurrence information, if it is notified that earthquake has occurred in the area, the laundry treating apparatus 20 may recommend pause and driving stop of the washing machine.

The operation of the laundry treating apparatus 20 during earthquake may generate resonance or amplification of vibration, whereby the laundry treating apparatus 20 may be damaged.

Finally, according to the present invention, before the customized course and option are predicted in the pattern structure formula and recommended, the option may be controlled based on the area information, and the optimal course and option may be recommended by reflecting the area information when the customized course and option are predicted.

Meanwhile, the external terminal 40 may be provided to perform communication with any one of the server 10 and the external system 50, thereby remotely controlling the laundry treating apparatus 20.

The external terminal 40 may determine whether the laundry treating apparatus 20 recommends the course and option. It means that personal information of the specific user P should be used to recommend the course and option.

Therefore, whether the laundry treating apparatus 20 recommends the course and option may be determined by the user's intention, whereby personal information of the user may be prevented from being released to the external terminal 40 without consent of the user.

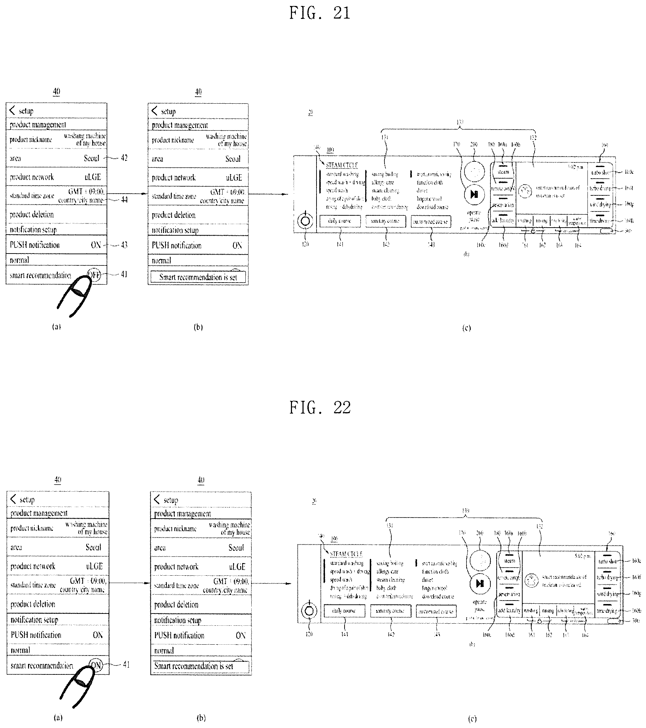

FIGS. 21a and 21b illustrate a screen of the external terminal 40, and FIG. 21c illustrates a screen of the display unit 130 of the laundry treating apparatus.

Referring to FIG. 12a, the external terminal 40 may include an application program for remotely controlling the laundry treating apparatus 20 and connecting the laundry treating apparatus 20 with the external terminal 40 by communication. If the application program is executed, a button 410 for determining whether a course and option may be recommended may be displayed on the screen of the external terminal 40. For example, the button 41 may be a button stated with smart recommendation or other words, or may be a touch area displayed on the external terminal 40.

Referring to FIG. 21b, if the user touches the button 41, a function of recommending a course and option customized for the user may be enabled. For example, the smart recommendation may be set.

If the function of recommending the customized course and option is enabled by the external terminal 40, the external terminal 40 may be set to perform communication with the laundry treating apparatus 20 through the server 10 or directly perform communication with the laundry treating apparatus 20, whereby the laundry treating apparatus 20 may recommend the course and option.

Referring to FIG. 21c, if the laundry treating apparatus 20 is set by the external terminal 40 to recommend the customized course and option, the function of recommending the course and option may be enabled on the display unit 130 of the laundry treating apparatus 20. For example, a phrase such as "smart recommendation is set", which displays that the function of recommending the course and option in a customized type is enabled, may be displayed on the display unit 130 of the laundry treating apparatus 20. Therefore, the laundry treating apparatus 20 may recommend the course and option customized for the user through the external terminal 40.

Referring to FIG. 22, the user may control the external terminal 40 to disable the function of recommending the customized course and option in the laundry treating apparatus 20. That is, if the user does not want, the external terminal 40 disables the function of recommending the course and option to prevent personal information from being released, prevent the laundry treating apparatus 20 from unnecessarily consuming a power to perform communication with the server 10, etc. or prevent a washing process from being delayed until the laundry treating apparatus 20 is connected with the server 10.

The external terminal 40 may be provided to again touch the touch area such as the smart recommendation or the button 41.

Referring to FIG. 22b, the button 41 for the smart recommendation may be disabled, and the function of recommending the customized course and option may be disabled.

Referring to FIG. 22c, the laundry treating apparatus 20 may display release of the smart recommendation for recommending course and option on the display unit 130. Therefore, the laundry treating apparatus 20 may stop recommendation of the course and option to the user.

As a result, whether the function of providing the customized course and option of the laundry treating apparatus 20 is enabled may be determined through the application program and screen of the external terminal 40, and the external terminal 40 may remotely control the laundry treating apparatus 20.

Meanwhile, the laundry treating apparatus 20 and the server 10 may have a difficulty in exactly identifying a place and area where the laundry treating apparatus 20 is located. Therefore, the server 10 and the laundry treating apparatus 20 may not properly use the area information provided by the external system 50.

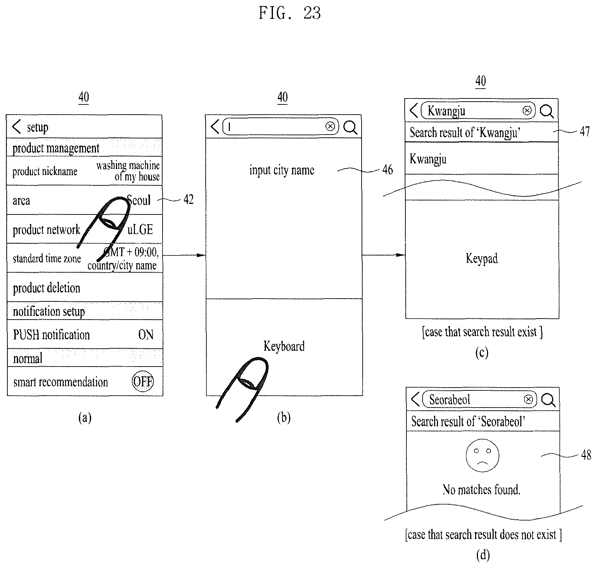

Referring to FIG. 23, the external terminal 40 may provide the area information where the laundry treating apparatus 20 is located to the server 10 or the laundry treating apparatus 20. That is, the user may directly set the area where the laundry treating apparatus 20 is located through the external terminal 40, whereby area information of a desired area may be transferred to the server 10 or the laundry treating apparatus 20. Therefore, reliability of the area information may be more obtained.

If the application program for controlling the laundry treating apparatus 20 is executed in the external terminal 40, a touch portion or button 42 for selecting the area where the laundry treating apparatus 20 is located may exist on the screen of the external terminal 40 (see FIG. 23a).

The user may directly set the area where the laundry treating apparatus 20 is installed by touching the touch portion or the button 42. If the external terminal 40 sets the area, the information may be transferred to the server 10 and stored therein.

For example, if the area selection portion 42 is selected, the screen of the external terminal 40 may move to a screen 46 for directly searching for a city name (see FIG. 23b). At this time, if a right area is searched, a search result 47 may be displayed on the screen of the external terminal 40 (see FIG. 22c), and if an area that does not exist is searched, an error message or icon 48 indicating that the area does not exist may be displayed on the screen of the external terminal 40 (see FIG. 23d).

Therefore, the user may intuitively set the area where the laundry treating apparatus 20 is located through the external terminal 40, and area information of the area may be transferred from the external system 50 to the server 10, the laundry treating apparatus 20 and the external terminal 40, whereby the area information may be used to recommend the customized course and option.

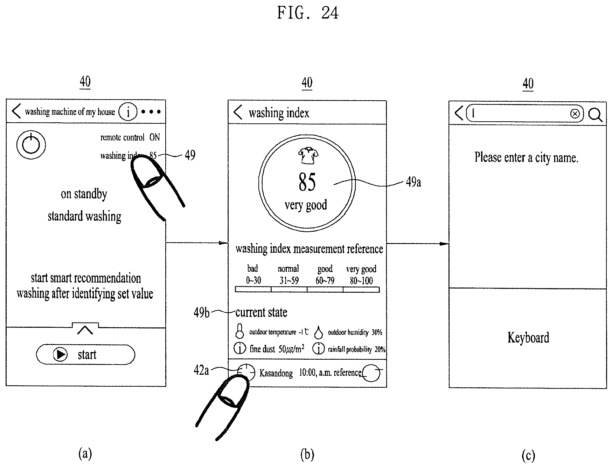

Referring to FIG. 24, a reason why a specific course and option are recommended may be displayed on the screen of the external terminal 40. For example, the reason why the course and option are recommended may be converted to a washing index 49, whereby the washing index 49 may be provided to be displayed for the user.

The washing index 49 may be partitioned to reach 0 to 100. If the washing index 49 has a high value, it may mean that it is good time to wash laundry. The washing index 49 may be a value for determining good timing to wash laundry by summing up or considering the area information transferred from the external system 50.

The washing index 49 may be transferred from the external system 50, or may be provided through the server after the manufacturer and seller directly set and compute the summed-up value.

The user may intuitively recognize whether it is good time to wash laundry by recognizing the washing index 49 even without identifying the area information.

The state information of the laundry treating apparatus 20 may be displayed on the screen of the external terminal 40 (see FIG. 24a), and if the washing index 49 is selected, a screen 49a on which the washing index is displayed in the form of graph may be displayed on the screen of the external terminal 40 (see FIG. 24b). Also, a position of an area 42a may be displayed on the screen, and if the position is searched, the screen of FIG. 24 may be displayed (see FIG. 24c).

Referring to FIG. 24b, the washing index 49a may be displayed on the screen of the external terminal 40 to intuitively express good timing for washing laundry through a color as well as a numerical value.

For example, if the washing index 49a displayed in the form of graph is 30 or less, the washing index 49a may be displayed as a red color indicating bad. If the washing index 49a is 31 to 60, the washing index 49a may be displayed as an orange color indicating normal. If the washing index 49a is 60 to 80, the washing index 49a may be displayed as a green color indicating good. If the washing index 49a is 80 or more, the washing index 49a may be displayed as a blue color indicating very good.

That is, since the washing index 49a indicates from red to blue, it means an environment good to wash laundry, whereby the user may intuitively interpret area information and determine a washing timing.

A time portion 44 for setting a time zone may be provided on the screen of the external terminal 40 (see FIG. 23). The user may directly input a time of the area where the laundry treating apparatus 20 is located by selecting the time portion 44. Therefore, the external terminal 40 may directly transfer area information on the current time to the laundry treating apparatus 20.

Meanwhile, the external terminal 40 may be provided to store a schedule of the new user for a certain time, and may transfer the schedule to any one of the server and the laundry treating apparatus, whereby the schedule may be reflected in the use prediction formula.

Although not shown, a schedule such as travel and exercise of the user may be written in the external terminal 40, and may be transferred to the server 10 and finally transferred to the laundry treating apparatus 20.

For example, the laundry treating apparatus 20 may recommend a customized course and option at the time when the user returns to travel and the time when the user returns to exercise. In this case, since the amount of laundry is great or most of laundry has a high pollution level, it may be preferable to recommend a normal course or allergy care course and an option of strong washing strength and many rinsing times.

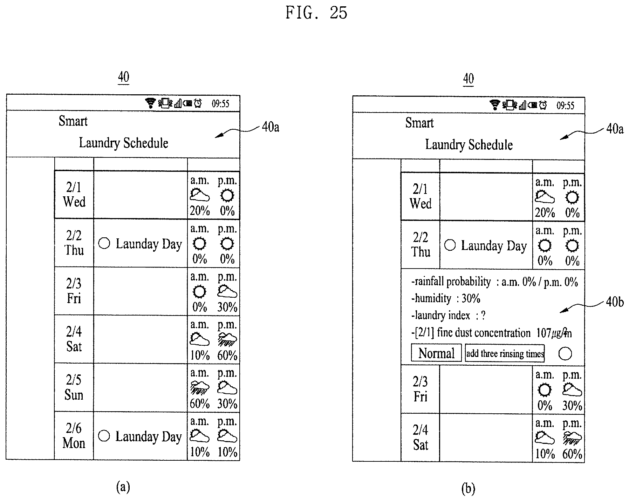

Referring to FIG. 25, the external terminal 40 or the laundry treating apparatus 20 may receive the weather information corresponding to a certain time period from the external system 50.

Therefore, the external terminal 40 and the laundry treating apparatus 20 may provide a washing schedule 40a for recommending a good date to wash laundry.

The washing schedule 40a may be displayed on the screen of the external terminal 40. The washing schedule may be based on area information for a certain time period, and may correspond to a week period (see FIG. 25a).

Meanwhile, if a recommended date of washing is selected from the washing schedule 40a, area information of the date and the recommended course and option 40b may be displayed on the screen of the external terminal 40 in detail (see FIG. 25b).

Also, a good date to wash laundry may be displayed on the screen of the external terminal 40 through a push alarm. Therefore, the online system which uses the use prediction formula B may provide a washing schedule customized for the user to guide the user to perform washing of laundry at the good date to wash laundry.

If a course and option provided by the server 10 are displayed, the external terminal 40 may display a manipulation button that may remotely perform the laundry treating apparatus 20 through the course and option.

Hereinafter, a control method of the laundry treating apparatus 20 which may predict and recommend a course and option customized for a user will be described with reference to FIG. 25.

The laundry treating apparatus 20 of the present invention may include the communication module 60, the controller 400, the display unit 130, the input unit 150, the operation unit 170, and the recommendation request unit 180.

The control method of the laundry treating apparatus 20 or the controller 400 may include an inputting step s1 for sensing whether the recommendation request unit 180 is input if a power source is supplied to the laundry treating apparatus 20 or the controller 400, an computing step s3 for determining a course and option predicted to be used by a specific user if it is sensed that the recommendation request unit 180 is input, and a recommending step s6 for displaying the computed course and option on the display unit 130.

The recommendation request unit 180 defined in the inputting step s1 may be a broad component that senses the user's intention to be recommended a course and option suitable for a current status in the server 10 or the laundry treating apparatus 20. That is, the recommendation request unit 180 may be a specific switch located on the control panel 100.

Also, if the user is recommended a course and option suitable for a current status as the user's action or voice is recognized by the controller 400, the camera 200 or the microphone 300 may serve as the recommendation request unit 180.

Also, if the user sets the external terminal 40 to recommend a course and option customized for a washing machine through an application, the external terminal 40 may serve as the recommendation request unit 180.

In other words, the input unit 150 may correspond to a switch provided on the control panel 100, the microphone 300, the camera 200 and the external terminal 40. Therefore, if it is sensed whether the input unit 150 is input, it may mean that the user recognizes a specific action performed by desiring to be recommended a course and option from the above components.

If the user does not perform any input for the recommendation request unit 180 in the inputting step s1, since the user does not desire to be recommended a course or option, the step of providing or recommending a basic course and option to the laundry treating apparatus 20 may be performed (s5-1).

The basic course is a course provided formally by the course input unit 140, and the option may mean an option that the option selection unit 160 provides formally.

The step of providing or recommending a basic course and option may be the step of enabling the course selection unit 140 and the option selection unit 160 through the control panel 100.

The controller 400 may perform a grant sensing step s7 for sensing that the user selects the course selection unit 140 or the option selection unit 160 or not.

The grant sensing step s7 may be the step of sensing whether the user inputs the operation unit 170. If the user inputs the operation unit 170, the controller 400 may perform the step s8 of performing the course and option selected by the user, and perform the step s9 of storing a use history of the user in the controller 400 and learning the use prediction formula B.

The computing step s3 is the step of computing the course and option predicted to be used by the user or most suitable for the user at the current time through the recommendation use prediction formula B by means of the controller 400.

The use history of the specific user or the new user may be reflected in the use prediction formula B, or the use history may not be reflected in the use prediction formula B due to the reason why that the specific user or the new user first uses the laundry treating apparatus 20.

To identify this, the controller 400 may perform a checking step s2 of checking whether there is the use history indicating the specific user has used the laundry treating apparatus if it is sensed that the recommendation request unit 180 is input.

If it is sensed that the use history of the specific user is stored in the checking step s2, the controller 400 may include the step s3-2 of reflecting the history of the specific user in the use prediction formula B and computing the course and option specialized for the specific user.

However, if there is not use history of the specific user in the checking step s2, the controller 400 may perform an initial computing step s3-1 of computing a course step and recommending step predicted to be used by the specific user at the current time by computing the use prediction formula B provided by the server 10.

Since there is no history of the specific user in the use prediction formula B that may be accessed by the controller 400 in the initial computing step s3-1, the controller 400 computes the course and recommending step of the specific user by using histories of a plurality of unspecified users reflected when the use prediction formula B is generated in the server 10.

The current time may mean the state that use histories and patterns of courses and options used by a plurality of users and a specific user until now including date, day, and time of the current time are reflected.

The use prediction formula B may be stored in the controller 400, and if there is request of the controller 400, the laundry treating apparatus 20 may access the recommendation formula B stored in the server 10 by accessing the server 10 using the communication module 60.

That is, the computing step s3 may include the initial recommending step s3-1 and the reflection recommending step s3-2. The computing step s3 may be the step of recommending a course and option to the user based on the user's pattern.

The pattern or history of the specific user may include a history, which includes any one of the time when the laundry treating apparatus 20 is used by the specific user, date and day and a history of a course and option performed when the laundry treating apparatus is used at each time, date and day.

The history and pattern may be used to generate or learn the use prediction formula B, and may be an input value of the use prediction formula B.

The communication module 60 may be provided to perform communication with the external system 40, which provides area information where the specific user is located.

The external system 50 and the communication module 60 may directly perform communication with each other, the communication module 60 may perform communication with the server 10 and the server may perform communication with the external system 50, whereby the communication module 60 may indirectly perform communication with the external system 50.

If the controller 400 recommends a course and option by using the user's pattern or history, current area information may not be reflected.

Therefore, the control method of the laundry treating apparatus of the present invention may further include a step s4 of receiving the area information through the communication module 60, and a complementing step s5 of controlling at least one of the computed course and option in the controller 400 by reflecting the area information.

The area information may include any one or more of weather information as to rainy weather of an area where the specific user is located, including rainfall probability, atmospheric information providing a temperature, humidity and an atmospheric pollution state of the area, earthquake information providing whether earthquake has occurred in the area, water quality information providing water quality of the area, and information on electric charges per time zone of the area.

Also, the complementing step s5 may controlling the option, which includes one of more of washing strength of the laundry treating apparatus, rinsing times, dehydrating strength, device washing, operation time, water temperature, and steam supply, by receiving the area information.

Since the course and option have been controlled through the area information in the step complementing s5, its repeated description will be omitted.

Meanwhile, the weather information and the atmospheric information may include the weather information and the atmospheric information for a certain time period before the laundry treating apparatus is used.

The reason why the weather information and the atmospheric information correspond to information of a certain time period is that weather and atmospheric information of the current time may not reflect weather and atmospheric information of the past time. The certain time period may be a week or three days.

For example, if it was fine but heavy fine dust yesterday, laundry may be contaminated even though it is cloudy and little fine dust today.

Therefore, the laundry treating apparatus 20 may need to add an option for increasing rinsing times and washing strength and supplying steam to wash or sterilize the contaminated laundry.

Therefore, both the weather information and the atmospheric information in the area information need to consider information on the certain time period.

In the recommending step s6, the controller 40 recommends a course and option suitable for the user by the use prediction formula A, and completely controls the course and option by reflecting the area information. Then, at least one of the course and option is displayed, for the user, on the display unit 130.

The user may identify the course and option recommended through the display unit 130.

The recommending step s6 may include displaying the course and option in the form of push alarm through the external terminal 40.

The controller 400 may perform the grant sensing step s7 of sensing the specific user's grant in the step s6. If it is sensed that grant intention such as input of the operation unit 170 is sensed in the grant sensing step S7, the control method of the laundry treating apparatus may further include the step s8 of operating the laundry treating apparatus in accordance with the course and option displayed in the recommending step s6.

The grant sensing step s7 performed after the recommending step s6 is to input the operation unit 170 if the user regards that the course and option recommended in the recommending step is predicted to be used by or suitable for himself/herself. That is, the grant sensing step s7 may be the step of inputting a command to operate the laundry treating apparatus 20 as the operation unit 170 is input. If the operation unit 170 is input, the laundry treating apparatus 20 may be operated in accordance with the course and option.

Afterwards, if the course and option are completed, the step s9 of storing the history of the course and option in the controller 400 may be performed. The stored use history may be used to learn the use prediction formula B. In this case, more elaborate customized course and option may be recommended by learning of the pattern of the specific user. Also, the use history may be provided as a use history input to the use prediction formula B.

Meanwhile, the user may need to reject the recommended course and option. In this case, the step s7-1 of inputting the basic course and option may be performed.

That is, the user may disregard the recommended source and set the course and option by directly selecting the course selection unit 140 and the option selection unit 160. Therefore, it is possible to reflect the user's active use intention by overcoming the limitation of the use prediction formula B.

As described above, the laundry treating apparatus 20 may include a camera 200 that may recognize the specific user's action, and the sensing step s1 may sense whether the input is performed by recognizing the specific user's specific action.

Also, the laundry treating apparatus 20 may include a microphone that may recognize the specific user's voice, and the sensing step s1 may sense whether the input is performed by recognizing the specific user's voice command.

Meanwhile, the communication module 60 may be provided to perform communication with the external terminal 40 that may remotely control the laundry treating apparatus 20, and whether the input is performed may be transferred remotely from the external terminal 40.

The recommending step s6 may include recommending date or time suitable for driving the laundry treating apparatus to the external terminal 40 on the basis of the weather information and the atmospheric information for a certain time period before the laundry treating apparatus is sued.

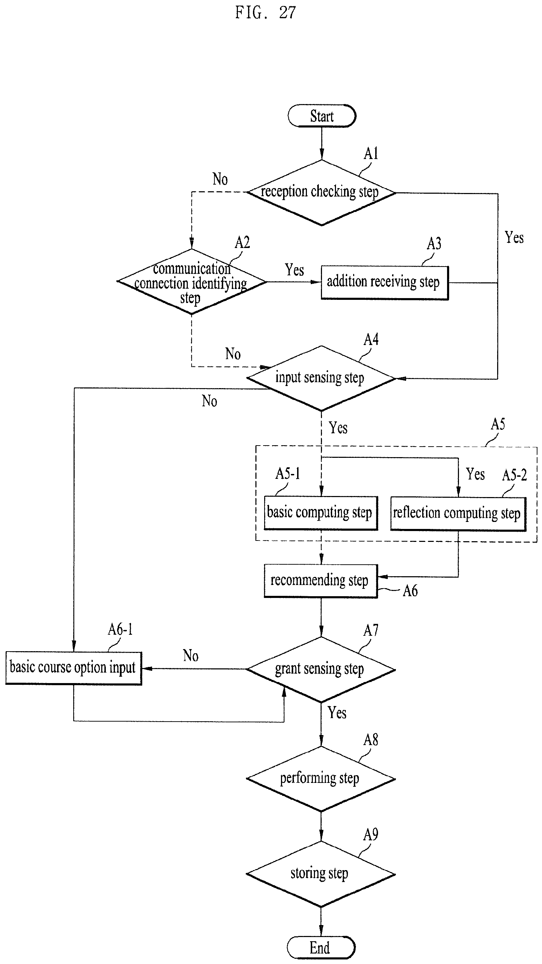

FIG. 27 illustrates a control method of a laundry treating apparatus according to another embodiment of the present invention.

The laundry treating apparatus 20 of the present invention may perform the step A1 of checking whether the server 10 has received area information, and may perform the step A4 of sensing whether the recommendation request unit has been input.

That is, according to the laundry treating apparatus 20 of the present invention, the controller 400 may identify whether area information has been received from the communication module 60 if a power source is supplied to the controller 400.

This is for receiving the local information as soon as possible, and receiving the recommendation request unit 600 by the controller 400, and calculating the course and the option by reflecting the local information immediately without time delay.

If it is not sensed that the area information is received in the step A1, It is undesirable to passively wait until receiving the local information. The user may misunderstand that the clothes processing apparatus 20 has failed because the recommendation of the course or option is delayed.

Therefore, if the latest area information is not received in the reception confirmation step A1, the step A2 of identifying communication connection between the communication module 60 and the server 10 may be performed.

At this time, if the communication connection is identified in the step A2, the communication module 60 may perform the additional receiving step A3 of immediately receiving the area information by requesting the server 10, external terminal 40 or external system 50 of the area information.

But, if the communication connection is not continuously sensed in the step A2, it is preferable to immediately perform the input sensing step A4. If the communication connection is not confirmed even in the communication connection confirmation step (A2) , this is because that the communication module 60 is in the state that it cannot receive the area information immediately due to the fact that WiFi setup mode is not performed or a problem in the communication state with the server.

Therefore, the laundry treating apparatus 20 of the present invention may omit reception of the local information and omit reflecting the local information in the recommendation formula B.

Thus, the apparel processing apparatus 20 of the present invention can prevent a delay in recommending a course or option when the recommendation input unit 180 is input.

If the recommendation request unit 180 is input, the controller 400 may perform a computing step A5 of determining the course and option to be recommended through the use prediction formula B and a recommending step A6 of displaying the course and option determined to be recommended on the display unit.

If the area information is not received from the server 10 in the calculation step A5, the control unit 400 can perform a basic calculation step (A5-1) determined at least one of the recommended course and option using only the recommendation formula (B)

Thus, the laundry treating apparatus 20 can recommend a customized course or option to the user even if the local information is not received.

However, if it is detected that the area information is received in the reception checking step A1 or the additional receiving step A3, the control unit 400 can perform a reflection computing step A5-2 adjusting the recommended course or option by reflecting the area information.

Thus, the laundry treating apparatus 20 can recommend at least one of a course and an option more suitable for the user by reflecting local information at the time of operating the laundry treating apparatus 20.

At this time, if the recommended course and option are satisfied, the user may operate the laundry treating apparatus in accordance with the course and option by inputting the operation unit 170.

Therefore, the laundry treating apparatus 20 of the present invention may perform the grant sensing step A7 for detecting whether or not the operation unit 170 is input, so that the user can confirm whether user agrees with a recommended course or option.

If the operation unit 170 is input, the controller 400 may perform the step A8 of performing the recommended course and option.

in the recommending step A6, the user may not agree to at least one of the course and option recommended by the controller 400. In this case, if the course and option are insisted to be performed, the user's intention may be disregarded. To avoid this, the controller 400 may perform a basic course option inputting step A6-1 of sensing whether the basis course and option are input in the grant sensing step A7.

The basic course is a course provided formally by the course input unit 140, and the option may mean an option that the option selection unit 160 provides formally.

When the recommending step A6 is performed, the fact that the input of the basic course and the option is detected rather than the input of the operation unit 170 is detected means that the user does not agree with the recommended course and option.

In other words, if the user does not agree with the recommended course or option, the user can input the input unit 150 directly to adjust the course or option. Accordingly, the basic course input step A6-1 may include a step of inputting the course input unit 140 and the option selection unit 160 of the input unit 150 when the user does not approve the recommended course or option after the recommending step A6 Of the input signal is detected.

For this, even if the recommending step A6 is performed, the input unit can maintain the activated state so that the basic course and the options can be input.

AS a result, as the basic course and option are input, the user's intention is sufficiently reflected.

Thus, even if the course and the option are recommended, the laundry treating apparatus 20 can be operated as a course and an option directly input or adjusted by the user.

If the basic course option inputting step A6-1 is performed, the grant sensing step A7 of sensing whether the operation unit is input may be performed again.

If the grant sensing step A7 is performed again and the operation unit 170 is input, the performing step A8 may be performed. However, if the input unit 150 is input, the basic course option input step A6-1 may be performed again.

Therefore, even though the course and option are recommended, the laundry treating apparatus 20 may be operated in accordance with the course and option directly input or controlled by the user.

Meanwhile, if the step A8 ends, or the step A8 is started performing, the storing step A9 of storing the use history of at least one of the course and option, which are performed, in the controller may be performed.

The use history can be accumulated in the storage unit 420 through the storing step A9, and an input value that can be input to the recommendation formula B can be secured. Also, the control unit 400 may update or re-acquire the recommendation formula (B) through the use history.

## Claims

1. A laundry treating apparatus (20), configured to
recommend a laundry treating course or a laundry treating option, the laundry treating course being one of arbitrary courses that include one or more of a washing cycle and a drying cycle, the laundry treating option being one of arbitrary options for setting a condition corresponding to a strength level and a number of repetitions of the laundry treating course or for changing the condition that has been set, the laundry treating apparatus (20) comprising:
a recommendation request unit (180) configured to receive input that enables a recommendation of a laundry treating course from among arbitrary courses or a recommendation of a laundry treating option from among arbitrary options;
a controller (400) for computing and determining a course or option to be recommended from the arbitrary courses or the arbitrary options in accordance with a recommendation algorithm when a recommendation request unit (180) is input; and
a display unit (131, 132) for displaying the course or option determined to be recommended by the controller (400),
**characterized in that** the controller (400) comprises a storage unit configured to store the recommendation algorithm to determine the course or option to be recommended.

2. The laundry treating apparatus (20) according to claim 1, further comprising a communication module (60) connected with a server or an external terminal, which transfers information to the controller (400),
wherein the controller (400) is further configured to determine the recommended course or the recommended option regardless of a state of the communication module,
wherein the state of the communication module (600) comprises:
a state of the restriction in communication between the communication module and the server, or a state of the restriction in communication between the communication module and the external terminal.

3. The laundry treating apparatus (20) according to claim 1 or 2, wherein the controller (400) further includes a computing unit for computing the course or option to be performed from the arbitrary courses or the arbitrary options in accordance with the recommendation algorithm and determining the course or option to be recommended.

4. The laundry treating apparatus (20) according to claim 3, wherein the storage unit (420) is provided to store
a use history of the laundry treating apparatus in order; and
based on the use history corresponding to a number of usages greater than or equal to a threshold count, delete a portion of the use history in the stored order.

5. The laundry treating apparatus (20) according to any one of claims 1 to 4, wherein the controller (400) is provided to determine the course or option to be recommended from the arbitrary courses or the arbitrary options even before information including a use history of a specific user who uses the laundry treating apparatus (20) is input.

6. The laundry treating apparatus (20) according to any one of claims 1 to 5,
wherein the recommendation algorithm is configured to, based on the use histories corresponding to a number of usages less than or equal to a threshold count, output the recommended course or the recommended option.

7. The laundry treating apparatus (20) according to any one of claims 1 to 6, wherein the controller (400) is provided to again acquire the recommendation algorithm by additional deep learning of use histories of the specific user.

8. The laundry treating apparatus (20) according to any one of claims 3 to 7,
wherein a communication module (60) is provided to transfer one or more of area information of an area where the laundry treating apparatus (20) is located and the recommendation algorithm to the controller (400) by performing communication with a server or an external terminal,
wherein the controller (400) includes a storage unit (420) provided to store the recommendation algorithm therein, and exchanges and updates the recommendation algorithm of the storage unit (420) when the recommendation algorithm is transmitted,
wherein the area information comprises one or more of:
weather information including a weather forecast of an area corresponding to the location of the laundry treating apparatus,
atmospheric information including a temperature, a humidity level, and an atmospheric pollution level of the area,
earthquake information related to an occurrence of earthquake in the area,
water quality information related to water quality of the area, or
information on electricity cost per time in the area.

9. The laundry treating apparatus (20) according to claim 1, further comprising a communication module (60) communicated with a server or an external terminal, which transfers information to the controller (400),
wherein the controller (400) is configured to be able to receive the course and option from the server through the communication module (60),
wherein if the recommendation request unit is inputted, the display unit is configured to display the course or option transmitted to the communication module.

10. The laundry treating apparatus (20) according to claim 8, wherein the communication module (60) is provided to immediately transfer the area information to the controller (400) when a power supply unit (120) supplies a power source to the controller (400), or is provided to periodically store the area information that is able to be substituted for the recommendation algorithm.

11. The laundry treating apparatus (20) according to any one of claims 1 to 10, wherein the recommendation request unit (180) includes one or more of a camera (200) for recognizing the user's action and a microphone (300) for recognizing the user's voice, and a recommendation request is input in the recommendation request unit (180) when the user's specific action is recognized through the camera (200) and the user's specific voice is recognized through the microphone (300).

12. A control method of a laundry treating apparatus (20), which comprises
a cabinet configured to form the appearance a recommendation request unit (180) provided on the cabinet and configured to receive input that enables a recommendation of a laundry treating course from among arbitrary courses or a recommendation of a laundry treating option from among arbitrary options;
a controller (400) for determining the course or option to be recommended based on a recommendation algorithm stored in a storage unit, a display unit (131, 132) for displaying the course or option determined to be recommended, and an operation unit (170) for receiving a command to perform the determined course or option, and a communication module (60) for receiving area information by performing communication with a server,
**characterized in that** the control method comprises:
an input sensing step (A4) of sensing an input of the recommendation request unit (180);
a computing step (A5) of determining the course or option to be recommended in the controller (400) through the recommendation algorithm;
a recommending step (A6) of displaying the determined course or option to be recommended on the display unit (131, 132); and
a performing step (A8) of conducting the course or option determined by the input of the operation unit (170),
wherein the computing step (A5) and the recommendation step (A6) are continuously performed if the input sensing step (A4) is performed.

13. The method of a laundry treating apparatus (20) according to claim 12, further comprises an acknowledging step (A1) of checking whether the server has received area information;
wherein the computing step (A5) includes a basic computing step of determining the course or option to be recommended using only the use recommendation algorithm if the area information is not received from the server and a reflection computing step of determining the course or option to be recommended by reflecting area information if the area information is received from the server.

14. The method of a laundry treating apparatus (20) according to claim 12, further comprising additional receiving step (A3) of receiving the area information if the communication connection is sensed at the acknowledging step (A1), wherein the input sensing step (A4) is performed if the communication connection is not sensed at the acknowledging step (A1).

## Patentansprüche

1. Wäschebehandlungsvorrichtung (20), die konfiguriert ist:
einen Wäschebehandlungsablauf oder eine Wäschebehandlungsoption zu empfehlen, wobei der Wäschebehandlungsablauf einer von beliebigen Abläufen ist, die einen oder mehrere eines Waschzyklus und eines Trocknungszyklus aufweisen, wobei die Wäschebehandlungsoption eine von beliebigen Optionen zum Einstellen einer Bedingung, die einem Stärkepegel und einer Anzahl von Wiederholungen des Wäschebehandlungsablaufs entspricht, oder zum Ändern der Bedingung ist, die eingestellt worden ist, wobei die Wäschebehandlungsvorrichtung (20) aufweist:
eine Empfehlungsanforderungseinheit (180), die konfiguriert ist, eine Eingabe zu empfangen, die eine Empfehlung eines Wäschebehandlungsablaufs aus beliebigen Abläufen oder eine Empfehlung einer Wäschebehandlungsoption aus beliebigen Optionen ermöglicht;
eine Steuereinheit (400) zum Berechnen und Bestimmen eines zu empfehlenden Ablaufs oder einer zu empfehlenden Option aus den beliebigen Abläufen oder den beliebigen Optionen gemäß einem Empfehlungsalgorithmus, wenn eine Empfehlungsanforderungseinheit (180) eingegeben wird; und
eine Anzeigeeinheit (131, 132) zum Anzeigen des Ablaufs oder der Option, der/die von der Steuereinheit (400) als zu empfehlen bestimmt wurde,
**dadurch gekennzeichnet, dass** die Steuereinheit (400) eine Speichereinheit aufweist, die konfiguriert ist, den Empfehlungsalgorithmus zu speichern, um den zu empfehlenden Ablauf oder die zu empfehlende Option zu bestimmen.

2. Wäschebehandlungsvorrichtung (20) nach Anspruch 1, die ferner ein Kommunikationsmodul (60) aufweist, das mit einem Server oder einem externen Endgerät verbunden ist, das Informationen zur Steuereinheit (400) überträgt,
wobei die Steuereinheit (400) ferner konfiguriert ist, den empfohlenen Verlauf oder die empfohlene Option unabhängig von einem Zustand des Kommunikationsmoduls zu bestimmen,
wobei der Zustand des Kommunikationsmoduls (600) aufweist:
einen Zustand der Einschränkung der Kommunikation zwischen dem Kommunikationsmodul und dem Server oder einen Zustand der Einschränkung der Kommunikation zwischen dem Kommunikationsmodul und dem externen Endgerät.

3. Wäschebehandlungsvorrichtung (20) nach Anspruch 1 oder 2, wobei die Steuereinheit (400) ferner eine Recheneinheit zum Berechnen des durchzuführenden Ablaufs oder der durchzuführenden Option aus den beliebigen Abläufen oder den beliebigen Optionen gemäß dem Empfehlungsalgorithmus und zum Bestimmen des zu empfehlenden Ablaufs oder der zu empfehlenden Option aufweist.

4. Wäschebehandlungsvorrichtung (20) nach Anspruch 3, wobei die Speichereinheit (420) vorgesehen ist, um:
einen Benutzungsverlauf der Wäschebehandlungsvorrichtung in Reihenfolge zu speichern; und
basierend auf dem Benutzungsverlauf, der einer Anzahl von Benutzungen entspricht, die größer oder gleich einer Schwellenzahl ist, einen Abschnitt des Benutzungsverlaufs in der gespeicherten Reihenfolge zu löschen.

5. Wäschebehandlungsvorrichtung (20) nach einem der Ansprüche 1 bis 4, wobei die Steuereinheit (400) vorgesehen ist, den zu empfehlenden Ablauf oder die zu empfehlende Option aus den beliebigen Abläufen oder den beliebigen Optionen zu bestimmen, noch bevor Informationen, die einen Benutzungsverlauf eines bestimmten Benutzers enthalten, der die Wäschebehandlungsvorrichtung (20) benutzt, eingegeben werden.

6. Wäschebehandlungsvorrichtung (20) nach einem der Ansprüche 1 bis 5, wobei der Empfehlungsalgorithmus konfiguriert ist, basierend auf den Benutzungsverläufen, die einer Anzahl von Benutzungen entsprechen, die kleiner oder gleich einer Schwellenzahl ist, den empfohlenen Ablauf oder die empfohlene Option auszugeben.

7. Wäschebehandlungsgerät (20) nach einem der Ansprüche 1 bis 6, wobei die Steuereinheit (400) vorgesehen ist, den Empfehlungsalgorithmus durch zusätzliches Deep Learning von Benutzungsverläufen des spezifischen Benutzers erneut zu erfassen.

8. Wäschebehandlungsgerät (20) nach einem der Ansprüche 3 bis 7,
wobei ein Kommunikationsmodul (60) vorgesehen ist, eine oder mehrere Gebietsinformationen eines Gebiets, in dem sich die Wäschebehandlungsvorrichtung (20) befindet, und den Empfehlungsalgorithmus an die Steuereinheit (400) zu übertragen, indem eine Kommunikation mit einem Server oder einem externen Endgerät durchgeführt wird, wobei die Steuereinheit (400) eine Speichereinheit (420) enthält, die vorgesehen ist, den Empfehlungsalgorithmus darin zu speichern, und den Empfehlungsalgorithmus der Speichereinheit (420) austauscht und aktualisiert, wenn der Empfehlungsalgorithmus übertragen wird,
wobei die Gebietsinformationen eines oder mehreres aufweisen von:
Wetterinformationen, die eine Wettervorhersage für ein Gebiet enthalten, das dem Standort der Wäschebehandlungsvorrichtung entspricht,
atmosphärische Informationen, einschließlich einer Temperatur, eines Feuchtigkeitsgrads und eines Luftverschmutzungsgrads des Gebiets,
Erdbebeninformationen, die sich auf das Auftreten eines Erdbebens in dem Gebiet beziehen,
Wasserqualitätsinformationen, die sich auf die Wasserqualität in dem Gebiet beziehen,
oder
Informationen über die Stromkosten pro Zeit in dem Gebiet.

9. Wäschebehandlungsvorrichtung (20) nach Anspruch 1, die ferner ein Kommunikationsmodul (60) aufweist, das mit einem Server oder einem externen Endgerät in Verbindung steht, das Informationen an die Steuereinheit (400) überträgt,
wobei die Steuereinheit (400) so konfiguriert ist, dass sie in der Lage ist, den Ablauf und die Option vom Server über das Kommunikationsmodul (60) zu empfangen,
wobei, wenn die Empfehlungsanforderungseinheit eingegeben wird, die Anzeigeeinheit konfiguriert ist, den an das Kommunikationsmodul übertragenen Ablauf oder die Option anzuzeigen.

10. Wäschebehandlungsvorrichtung (20) nach Anspruch 8, wobei das Kommunikationsmodul (60) vorgesehen ist, die Gebietsinformationen sofort an die Steuereinheit (400) zu übertragen, wenn eine Stromversorgungseinheit (120) eine Stromquelle an die Steuereinheit (400) liefert, oder vorgesehen ist, die Gebietsinformationen periodisch zu speichern, die für den Empfehlungsalgorithmus ersetzt werden können.

11. Wäschebehandlungsvorrichtung (20) nach einem der Ansprüche 1 bis 10, wobei die Empfehlungsanforderungseinheit (180) eine Kamera (200) zum Erkennen der Aktion des Benutzers und/oder ein Mikrofon (300) zum Erkennen der Stimme des Benutzers aufweist, und eine Empfehlungsanforderung in die Empfehlungsanforderungseinheit (180) eingegeben wird, wenn die spezifische Aktion des Benutzers durch die Kamera (200) erkannt wird und die spezifische Stimme des Benutzers durch das Mikrofon (300) erkannt wird.

12. Steuerverfahren einer Wäschebehandlungsvorrichtung (20), die aufweist:
ein Gehäuse, das konfiguriert ist, die Erscheinung einer Empfehlungsanforderungseinheit (180) zu bilden, die am Gehäuse vorgesehen und konfiguriert ist, eine Eingabe zu empfangen, die eine Empfehlung eines Wäschebehandlungsablaufs aus beliebigen Abläufen oder eine Empfehlung einer Wäschebehandlungsoption aus beliebigen Optionen ermöglicht;
eine Steuereinheit (400) zum Bestimmen des zu empfehlenden Ablaufs oder der zu empfehlenden Option basierend auf einem in einer Speichereinheit gespeicherten Empfehlungsalgorithmus, eine Anzeigeeinheit (131, 132) zum Anzeigen des zu empfehlenden Ablaufs oder der zu empfehlenden Option und eine Bedieneinheit (170) zum Empfangen eines Befehls, den bestimmten Ablauf oder die bestimmte Option auszuführen, und ein Kommunikationsmodul (60) zum Empfangen von Gebietsinformationen durch Ausführen einer Kommunikation mit einem Server,
**dadurch gekennzeichnet, dass** das Steuerverfahren aufweist:
einen Eingabeerfassungsschritt (A4) zum Erfassen einer Eingabe der Empfehlungsanforderungseinheit (180);
einen Berechnungsschritt (A5) zum Bestimmen des durch den Empfehlungsalgorithmus in der Steuereinheit (400) zu empfehlenden Ablaufs oder der zu empfehlenden Option;
einen Empfehlungsschritt (A6) des Anzeigens des bestimmten zu empfehlenden Ablaufs oder der zu empfehlenden Option auf der Anzeigeeinheit (131, 132); und
einen Durchführungsschritt (A8) zum Durchführen des/der durch die Eingabe der Bedieneinheit (170) bestimmten Ablaufs oder der Option,
wobei der Berechnungsschritt (A5) und der Empfehlungsschritt (A6) kontinuierlich durchgeführt werden, wenn der Eingabeerfassungsschritt (A4) durchgeführt wird.

13. Verfahren einer Wäschebehandlungsvorrichtung (20) nach Anspruch 12, das ferner einen Bestätigungsschritt (A1) aufweist, in dem überprüft wird, ob der Server Gebietsinformationen empfangen hat;
wobei der Berechnungsschritt (A5) einen Basisberechnungsschritt zum Bestimmen des zu empfehlenden Ablaufs oder der zu empfehlenden Option unter ausschließlicher Verwendung des Benutzungsempfehlungsalgorithmus, wenn die Gebietsinformationen nicht vom Server empfangen werden, und einen Reflexionsberechnungsschritt zum Bestimmen des zu empfehlenden Ablaufs oder der zu empfehlenden Option durch Reflektieren der Gebietsinformationen, wenn die Gebietsinformationen vom Server empfangen werden, aufweist.

14. Verfahren einer Wäschebehandlungsvorrichtung (20) nach Anspruch 12, das ferner einen zusätzlichen Empfangsschritt (A3) zum Empfangen der Gebietsinformationen aufweist, wenn die Kommunikationsverbindung im Bestätigungsschritt (A1) erfasst wird, wobei der Eingabeerfassungsschritt (A4) durchgeführt wird, wenn die Kommunikationsverbindung im Bestätigungsschritt (Al) nicht erfasst wird.

## Revendications

1. Machine à traiter le linge (20), prévue pour
recommander un programme de traitement de linge ou une option de traitement de linge, ledit programme de traitement de linge étant un programme entre des programmes aléatoires comprenant un ou plusieurs cycles de lavage et un cycle de séchage, ladite option de traitement de linge étant une option entre des options aléatoires pour régler une condition correspondant à un niveau d'intensité et un nombre de répétitions du programme de traitement de linge ou pour changer la condition ayant été réglée, ladite machine à traiter le linge (20) comprenant :
une unité de demande de recommandation (180) prévue pour recevoir une entrée activant une recommandation d'un programme de traitement de linge parmi des programmes aléatoires ou une recommandation d'une option de traitement de linge parmi des options aléatoires ;
un contrôleur (400) pour le calcul et la détermination d'un programme ou d'une option à recommander à partir des programmes aléatoires ou des options aléatoires en fonction d'un algorithme de recommandation lorsqu'une entrée d'unité de demande de recommandation (180) est saisie ; et
une unité d'affichage (131, 132) destinée à afficher le programme ou l'option déterminés pour recommandation par le contrôleur (400),
**caractérisée en ce que** le contrôleur (400) comprend une unité de mémorisation prévue pour mémoriser l'algorithme de recommandation afin de déterminer le programme ou l'option à recommander.

2. Machine à traiter le linge (20) selon la revendication 1, comprenant en outre un module de communication (60) relié à un serveur ou à un terminal externe, transférant des informations au contrôleur (400),
où le contrôleur (400) est en outre prévu pour déterminer le programme recommandé ou l'option recommandée indépendamment d'un état du module de communication,
ledit état du module de communication (600) comprenant :
un état de restriction de communication entre le module de communication et le serveur, ou un état de restriction de communication entre le module de communication et le terminal externe.

3. Machine à traiter le linge (20) selon la revendication 1 ou la revendication 2, où le contrôleur (400) comprend en outre une unité de calcul destinée à calculer le programme ou l'option à exécuter à partir des programmes aléatoires ou des options aléatoires en fonction de l'algorithme de recommandation, et déterminer le programme ou l'option à recommander.

4. Machine à traiter le linge (20) selon la revendication 3, où l'unité de mémorisation (420) est prévue pour mémoriser
un historique d'utilisations de la machine à traiter le linge, dans l'ordre ; et
sur la base de l'historique d'utilisations correspondant à un nombre d'utilisations supérieur ou égal à une valeur de seuil, effacer une partie de l'historique d'utilisations dans l'ordre mémorisé.

5. Machine à traiter le linge (20) selon l'une des revendications 1 à 4, où le contrôleur (400) est prévu pour déterminer le programme ou l'option à recommander à partir des programmes aléatoires ou des options aléatoires même antérieurement à l'entrée d'informations comprenant un historique d'utilisations d'un utilisateur spécifique se servant de la machine à traiter le linge (20).

6. Machine à traiter le linge (20) selon l'une des revendications 1 à 5, où l'algorithme de recommandation est prévu pour sortir le programme recommandé ou l'option recommandée, sur la base des historiques d'utilisations correspondant à un nombre de utilisations inférieur ou égal à une valeur de seuil.

7. Machine à traiter le linge (20) selon l'une des revendications 1 à 6, où le contrôleur (400) est prévu pour réacquérir l'algorithme de recommandation par apprentissage profond complémentaire d'historiques d'utilisations de l'utilisateur spécifique.

8. Machine à traiter le linge (20) selon l'une des revendications 3 à 7,
où un module de communication (60) est prévu pour transférer une ou plusieurs informations de zone, d'une zone où la machine à traiter le linge (20) est située et l'algorithme de recommandation au contrôleur (400) en établissant une communication avec un serveur ou un terminal externe,
où le contrôleur (400) comprend une unité de mémorisation (420) prévue pour mémoriser l'algorithme de recommandation, et échange et met à jour l'algorithme de recommandation de l'unité de mémorisation (420) lorsque l'algorithme de recommandation est transmis,
où les informations de zone comprennent une ou plusieurs des informations suivantes :
informations météorologiques comportant des prévisions météorologiques d'une zone correspondant à l'emplacement de la machine à traiter le linge,
informations atmosphériques comportant une température, un degré d'humidité et un niveau de pollution atmosphérique de la zone,
informations sismologiques relatives à l'occurrence d'un séisme dans la zone,
informations de qualité de l'eau relatives à la qualité de l'eau de la zone, ou
informations sur le coût horaire de l'électricité dans la zone.

9. Machine à traiter le linge (20) selon la revendication 1, comprenant en outre un module de communication (60) communiquant avec un serveur ou un terminal externe, transférant des informations au contrôleur (400),
où le contrôleur (400) est prévu pour pouvoir recevoir le programme et l'option du serveur via le module de communication (60),
où, si une entrée d'unité de demande de recommandation est saisie, l'unité d'affichage est prévue pour afficher le programme ou l'option transmis au module de communication.

10. Machine à traiter le linge (20) selon la revendication 8, où le module de communication (60) est prévu pour transférer immédiatement les informations de zone au contrôleur (400) lorsqu'une unité d'alimentation électrique (120) relie une source de courant au contrôleur (400), ou est prévu pour mémoriser périodiquement les informations de zone pouvant être substituées pour l'algorithme de recommandation.

11. Machine à traiter le linge (20) selon l'une des revendications 1 à 10, où l'unité de demande de recommandation (180) comprend une ou plusieurs caméras (200) pour reconnaître l'action d'utilisateur et microphones (300) pour reconnaître la voix de l'utilisateur, et où une demande de recommandation est entrée dans l'unité de demande de recommandation (180) lorsque l'action spécifique de l'utilisateur est reconnue par la caméra (200) et la voix spécifique de l'utilisateur est reconnue par le microphone (300).

12. Procédé de commande d'une machine à traiter le linge (20), comprenant une carrosserie prévue pour donner son aspect extérieur à une unité de demande de recommandation (180) prévue sur la carrosserie et prévue pour recevoir une entrée activant une recommandation d'un programme de traitement de linge parmi des programmes aléatoires ou une recommandation d'une option de traitement de linge parmi des options aléatoires ;
un contrôleur (400) pour déterminer le programme ou l'option à recommander sur la base d'un algorithme de recommandation mémorisé dans une unité de mémorisation, une unité d'affichage (131, 132) pour afficher le programme ou l'option déterminés à recommander, et une unité fonctionnelle (170) pour recevoir une instruction d'exécution du programme ou de l'option déterminés, et un module de communication (60) pour recevoir des informations de zone par établissement d'une communication avec un serveur,
**caractérisé en ce que** ledit procédé de commande comprend :
une étape de détection d'entrée (A4) où est détectée une entrée de l'unité de demande de recommandation (180) ;
une étape de calcul (A5) où sont déterminés le programme ou l'option à recommander dans le contrôleur (400) par l'algorithme de recommandation ;
une étape de recommandation (A6) où sont affichés sur l'unité d'affichage (131, 132) le programme ou l'option déterminés à recommander ; et
une étape d'exécution (A8) où est commandé le programme ou l'option déterminés par l'entrée de l'unité fonctionnelle (170),
l'étape de calcul (A5) et l'étape de recommandation (A6) étant exécutées de manière continue si l'étape de détection d'entrée (A4) est exécutée.

13. Procédé pour une machine à traiter le linge (20) selon la revendication 12, comprenant en outre une étape d'accusé de réception (A1) où il est contrôlé si le serveur a reçu des informations de zone ;
l'étape de calcul (A5) comprenant une étape de calcul de base où le programme ou
l'option à recommander sont déterminés exclusivement au moyen de l'algorithme de recommandation d'utilisation si les informations de zone ne sont pas reçues du serveur et une étape de calcul réflexif où le programme ou l'option à recommander sont déterminés par réflexion d'informations de zone si les informations de zone sont reçues du serveur.

14. Procédé pour une machine à traiter le linge (20) selon la revendication 12, comprenant en outre une étape de réception complémentaire (A3) où sont reçues les informations de zone si la connexion de communication est détectée lors de l'étape d'accusé de réception (A1), l'étape de détection d'entrée (A4) étant exécutée si la connexion de communication n'est pas détectée lors de l'étape d'accusé de réception (A1).
